(19) Europäisches Patentamt
European Patent Office
Office européen des brevets

(11) EP 4 373 186 A2

(12) **EUROPEAN PATENT APPLICATION**
published in accordance with Art. 153(4) EPC

(43) Date of publication:
**22.05.2024 Bulletin 2024/21**

(21) Application number: **22842446.1**

(22) Date of filing: **13.07.2022**

(51) International Patent Classification (IPC):
***H04W 72/04*** *(2023.01)* ***H04L 5/14*** *(2006.01)*

(52) Cooperative Patent Classification (CPC):
**H04L 5/14; H04W 72/04**

(86) International application number:
**PCT/KR2022/010169**

(87) International publication number:
**WO 2023/287184 (19.01.2023 Gazette 2023/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.07.2021 KR 20210091297**

(71) Applicant: **LG Electronics Inc.**
**Yeongdeungpo-gu**
**Seoul 07336 (KR)**

(72) Inventors:
- **SHIM, Jaenam**
  **Seoul 06772 (KR)**
- **KO, Hyunsoo**
  **Seoul 06772 (KR)**
- **YOU, Hyangsun**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

# (54) FREQUENCY RESOURCE CONFIGURATION-BASED WIRELESS SIGNAL TRANSMISSION OR RECEPTION METHOD AND DEVICE IN WIRELESS COMMUNICATION SYSTEM

(57) A frequency resource configuration-based wireless signal transmission or reception method and device in a wireless communication system is disclosed. A method for performing uplink transmission or downlink reception by a terminal in a wireless communication system according to an embodiment of the present disclosure may comprise the steps of: receiving, from a base station, configuration information related to a bandwidth part (BWP) for at least one of the uplink transmission and the downlink reception; identifying at least one physical resource block (PRB) on the basis of the configuration information; and performing the uplink transmission or the downlink reception on the basis of the at least one PRB, wherein on the basis of information related to a specific PRB group in the BWP, the at least one PRB is identified through exclusion of the specific PRB group from all PRBs of the BWP.

FIG.12

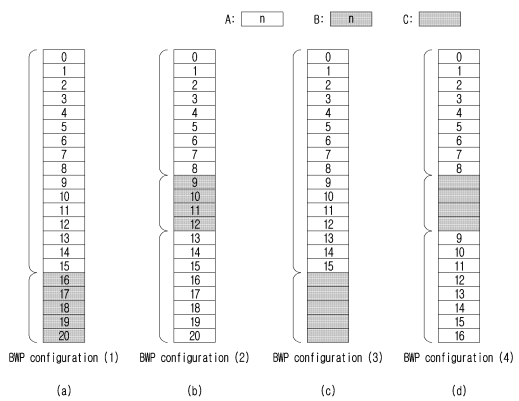


EP 4 373 186 A2

## Description

[Technical Field]

The present disclosure relates to a wireless communication system, and more particularly, to a method and an apparatus for transmitting and receiving a signal based on a frequency resource configuration in a wireless communication system.

[Background Art]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.
The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), Inband Full Duplex, Non-Orthogonal Multiple Access (NOMA), Super wideband Support, Device Networking, etc. have been researched.

[Disclosure]

[Technical Problem]

A technical object of the present disclosure is to provide a method and a device for transmitting and receiving a signal based on a frequency resource configuration.
An additional technical object of the present disclosure is to provide a method and a device for performing uplink/downlink transmission and reception based on a full duplex (FD) operation.
An additional technical object of the present disclosure is to provide a method and a device for configuring a frequency resource for a FD operation for uplink/downlink transmission and reception.
The technical objects to be achieved by the present disclosure are not limited to the above-described technical objects, and other technical objects which are not described herein will be clearly understood by those skilled in the pertinent art from the following description.

[Technical Solution]

A method for performing uplink transmission or downlink reception in a wireless communication system according to an aspect of the present disclosure includes receiving configuration information related to a bandwidth part (BWP) for at least one of the uplink transmission or the downlink reception from a base station; identifying at least one physical resource block (PRB) based on the configuration information; and performing the uplink transmission or the downlink reception based on the at least one PRB, and based on information related to a specific PRB group in the BWP, the at least one PRB may be identified by excluding the specific PRB group from entire PRBs of the BWP.
A method for performing uplink reception or downlink transmission by a base station in a wireless communication system according to an additional aspect of the present disclosure includes transmitting configuration information related to a bandwidth part (BWP) for at least one of the uplink reception or the downlink transmission to a terminal; and performing the uplink reception or the downlink transmission based on at least one physical resource block (PRB), and the at least one PRB may be based on the configuration information and based on information related to a specific PRB group in the BWP, the at least one PRB may be identified by excluding the specific PRB group from entire PRBs of the BWP.

[Technical Effects]

According to the present disclosure, a method and a device for transmitting and receiving a signal based on a frequency resource configuration may be provided.
According to the present disclosure, a method and a device for performing uplink/downlink transmission and reception based on a full duplex (FD) operation may be provided.
According to the present disclosure, a method and a device for configuring a frequency resource for a FD operation for uplink/downlink transmission and reception may be provided.

Effects achievable by the present disclosure are not limited to the above-described effects, and other effects which are not described herein may be clearly understood by those skilled in the pertinent art from the following description.

[Description of Diagrams]

Accompanying drawings included as part of detailed description for understanding the present disclosure provide embodiments of the present disclosure and describe technical features of the present disclosure with detailed description.

FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates full-duplex methods to which the present disclosure may be applied.
FIG. 8 illustrates the coexistence of a time resource in a half-duplex method and a time resource in a full-duplex method to which the present disclosure may be applied.
FIG. 9 illustrates a slot configuration in a subband full-duplex method and a slot configuration in a single frequency full-duplex method to which the present disclosure may be applied.
FIG. 10 illustrates base station resource operation based on a full-duplex method to which the present disclosure may be applied.
FIG. 11 illustrates a bandwidth part configuration based on a full-duplex method to which the present disclosure may be applied.
FIG. 12 illustrates a bandwidth part configuration by a base station based on a full-duplex method and physical resource block (PRB) indexing of a terminal to which the present disclosure may be applied.
FIG. 13 shows an example of a bandwidth part configuration by a base station based on a full-duplex method and PRB indexing of a terminal according to an embodiment of the present disclosure.
FIG. 14 shows another example of a bandwidth part configuration by a base station based on a full-duplex method and PRB indexing of a terminal according to an embodiment of the present disclosure.
FIG. 15 shows an example of a center frequency configuration according to an embodiment of the present disclosure.
FIG. 16 shows another example of a center frequency configuration according to an embodiment of the present disclosure.
FIG. 17 shows another example of a center frequency configuration according to an embodiment of the present disclosure.
FIG. 18 illustrates an operation of a terminal for an uplink transmission or downlink reception method in a wireless communication system according to an embodiment of the present disclosure.
FIG. 19 illustrates an operation of a base station for an uplink reception or downlink transmission method in a wireless communication system according to an embodiment of the present disclosure.
FIG. 20 is a diagram which illustrates a block diagram of a wireless communication device according to an embodiment of the present disclosure.

[Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.
In some cases, known structures and devices may be omitted or may be shown in a form of a block diagram based on a core function of each structure and device in order to prevent a concept of the present disclosure from being ambiguous.
In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system, "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.

BM: beam management
CQI: Channel Quality Indicator
CRI: channel state information - reference signal resource indicator
CSI: channel state information
CSI-IM: channel state information - interference measurement
CSI-RS: channel state information - reference signal
DMRS: demodulation reference signal
FDM: frequency division multiplexing
FFT: fast Fourier transform
IFDMA: interleaved frequency division multiple access
IFFT: inverse fast Fourier transform
L1-RSRP: Layer 1 reference signal received power
L1-RSRQ: Layer 1 reference signal received quality
MAC: medium access control
NZP: non-zero power
OFDM: orthogonal frequency division multiplexing
PDCCH: physical downlink control channel
PDSCH: physical downlink shared channel
PMI: precoding matrix indicator
RE: resource element
RI: Rank indicator
RRC: radio resource control
RSSI: received signal strength indicator
Rx: Reception
QCL: quasi co-location
SINR: signal to interference and noise ratio
SSB (or SS/PBCH block): Synchronization signal block (including PSS (primary synchronization signal), SSS (secondary synchronization signal) and PBCH (physical broadcast channel))
TDM: time division multiplexing
TRP: transmission and reception point
TRS: tracking reference signal
Tx: transmission
UE: user equipment
ZP: zero power

## Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, $\mu$). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| $\mu$ | $\Delta f=2^{\mu}$ 15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW) .

[Table 2]

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of $T_c=1/(\Delta f_{max}\cdot N_f)$. Here, $\Delta f_{max}$ is $480\cdot 10^3$ Hz and $N_f$ is 4096. Downlink and uplink transmission is configured (organized) with a radio frame having a duration of $T_f=1/(\Delta f_{max}N_f/100)\cdot T_c=10ms$. Here, a radio frame is configured with 10 subframes having a duration of $T_{sf}=(\Delta f_{max}N_f/1000)\cdot T_c=1ms$, respectively. In this case, there may be one set of frames for an uplink and one set of frames for a downlink. In addition, transmission in an uplink frame No. i from a terminal should start earlier by $T_{TA}=(N_{TA}+N_{TA,offset})T_c$ than a corresponding downlink frame in a corresponding terminal starts. For a subcarrier spacing configuration $\mu$, slots are numbered in an increasing order of $n_s^{\mu}\in\{0,..., N_{slot}^{subframe,\mu}-1\}$ in a subframe and are numbered in an increasing order of $n_{s,f}^{\mu}\in\{0,...,N_{slot}^{frame,\mu}-1\}$ in a radio frame. One slot is configured with $N_{symb}^{slot}$ consecutive OFDM symbols and $N_{symb}^{slot}$ is determined according to CP. A start of a slot $n_s^{\mu}$ in a subframe is temporally arranged with a start of an OFDM symbol $n_s^{\mu}N_{symb}^{slot}$ in the same subframe. All terminals may not perform transmission and reception at the same time, which means that all OFDM symbols of a downlink slot or an uplink slot may not be used. Table 3 represents the number of OFDM symbols per slot ($N_{symb}^{slot}$), the number of slots per radio frame ($N_{slot}^{frame,\mu}$) and the number of slots per subframe ($N_{slot}^{subframe,\mu}$) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 2 is an example on $\mu$=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered. Hereinafter, the physical resources which may be considered in an NR system will be described in detail.

First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

FIG. 3 illustrates a resource grid in a wireless communication system to which the present disclosure may be applied.

In reference to FIG. 3, it is illustratively described that a resource grid is configured with $N_{RB}^{\mu}N_{sc}^{RB}$ subcarriers in a frequency domain and one subframe is configured with $14 \cdot 2^{\mu}$ OFDM symbols, but it is not limited thereto. In an NR system, a transmitted signal is described by OFDM symbols of $2^{\mu}N_{symb}^{(\mu)}$ and one or more resource grids configured with $N_{RB}^{\mu}N_{sc}^{RB}$ subcarriers. Here, $N_{RB}^{\mu} \leq N_{RB}^{max,\mu}$. The $N_{RB}^{max,\mu}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k,l'). Here, k=0, ...,$N_{RB}^{\mu}N_{sc}^{RB}$-1 is an index in a frequency domain and l'=0,...,$2^{\mu}N_{symb}^{(\mu)}$-1 refers to a position of a symbol in a subframe. When referring to a resource element in a slot, an index pair (k,l) is used. Here, l=0,...,$N_{symb}^{\mu}$-1. A resource element (k,l') for $\mu$ and an antenna port p corresponds to a complex value, $a_{k,l'}^{(p,\mu)}$. When there is no risk of confusion or when a specific antenna port or numerology is not specified, indexes p and $\mu$ may be dropped, whereupon a complex value may be $a_{k,l'}^{(p)}$ or $a_{k,l'}$. In addition, a resource block (RB) is defined as $N_{sc}^{RB}$=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radiofrequency channel number).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n_{CRB}^{\mu}$ and a resource element (k,l) for a subcarrier spacing configuration $\mu$ in a frequency domain is given as in the following Equation 1.

【Equation 1】

$$n^{\mu}_{CRB} = \left\lfloor \frac{k}{N^{RB}_{sc}} \right\rfloor$$

In Equation 1, k is defined relatively to point A so that k=0 corresponds to a subcarrier centering in point A. Physical resource blocks are numbered from 0 to $N_{BWP,i}^{size,\mu}$-1 in a bandwidth part (BWP) and i is a number of a BWP. A relationship between a physical resource block $n_{PRB}$ and a common resource block $n_{CRB}$ in BWP i is given by the following Equation 2.

【Equation 2】

$$n^{\mu}_{CRB} = n^{\mu}_{PRB} + N^{start,\mu}_{BWP,i}$$

$N_{BWP,i}^{start,\mu}$ is a common resource block that a BWP starts relatively to common resource block 0.

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

[Table 5]

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be predefined. DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

## Full-duplex-based Operation

In a wireless communication system, new service types such as XR (Extended Reality), an AI-based service and an autonomous vehicle are emerging, and these services have a characteristic of dynamically changing traffic both in an uplink (UL) and downlink (DL) direction and requiring low latency for packet transmission. In a wireless communication system, traffic load will increase explosively to support these various cases.

On the other hand, the existing semi-static or dynamic TDD UL/DL configuration has a limit such as transmission time latency and interference between operators. The existing FDD method has a limit in terms of efficient frequency resource utilization for a DL/UL direction.

Accordingly, for low latency time and efficient resource utilization in a wireless communication system, it is necessary to introduce a full-duplex operation in a single carrier.

As an example of applying a full-duplex method in an intra-carrier, a subband-wise full-duplex (SB-FD) method and a spectrum sharing full-duplex (SS-FD) method as in FIG. 7 may be considered. Here, a SB-FD method may correspond to a subband full-duplex (SBFD) method and a SS-FD method may correspond to a single frequency full-duplex (SFFD) method.

FIG. 7 illustrates full-duplex methods to which the present disclosure may be applied. In reference to FIG. 7, FIG. 7(a) shows a SB-FD method and FIG. 7(b) shows a SS-FD method.

For a SB-FD method, a base station and a terminal perform uplink/downlink transmission and reception by using a different frequency resource in the same carrier. In other words, an uplink and a downlink occupy a different frequency resource for the same time resource.

On the other hand, for a SS-FD method, uplink/downlink transmission and reception are performed through the same frequency resource or an overlapped frequency resource in the same carrier.

The above-described full-duplex (hereinafter, FD) operation may be applied in combination with the existing half-duplex (hereinafter, HD) operation. As an example, in the existing HD-based TDD operation, only some time resources may be used for a FD operation. In a time resource which performs a full-duplex operation, an operation according to a SD-FD method or a SS-FD method may be performed.

FIG. 8 illustrates the coexistence of a time resource in a half-duplex method and a time resource in a full-duplex method to which the present disclosure may be applied.

In reference to FIG. 8(a), some time resources operate in a SB-FD method (i.e., SBFD) and the remaining time resources operate in a HD method. In reference to FIG. 8(b), some time resources operate in a SS-FD method (i.e., SFFD) and the remaining time resources operate in a HD method. As an example, a unit of a time resource may be a slot or a symbol.

In a time resource operating in a SB-FD method, some frequency resources are used as a DL resource and some frequency resources are used as an UL resource. For convenience of a description, in a time resource operating by FD, among all frequency resources, a frequency resource operating by a DL is referred to as a DL subband and a frequency resource operating by an UL is referred to as an UL subband.

For a FD operation described above, a FD operation may be performed from both a perspective of a base station (e.g., gNB) and a perspective of a terminal. In other words, both a base station and a terminal may simultaneously perform DL and UL transmission and reception by using the same or different frequency resource in the same time resource.

On the contrary, only a base station may perform a FD operation and a terminal may perform a HD operation. A base station may simultaneously perform DL and UL transmission and reception by using the same or different frequency resource in the same time resource, but a terminal may perform only DL reception or UL transmission in a specific time resource. In this case, a base station may perform a FD operation by performing DL transmission and UL reception with a different terminal at the same time.

Full Duplex Radio (FDR) Scenario

The introduction of FDR is being considered in A wireless communication system. For FDR, FDR that a base station performs DL and UL transmission and reception in the same frequency at the same time and FDR that a base station performs DL and UL transmission and reception in a different frequency at the same time may be considered. Here, a different frequency, unlike FDD, is a different frequency resource, but refers to a different frequency in a carrier or a spectrum. It is assumed that while a terminal may or may not support FDR which performs transmission and reception at the same time for all cases, a base station performs transmission and reception at the same time for all cases.

In FDR operation, a base station may consider configuring a time duration in a HD method and in a FD method separately. It may be largely divided into a subband full duplex (SBFD) method and a single frequency full duplex (SFFD) method.

Regarding a resource pattern in a cell, the above-described FIG. 8(a) shows an example of time division multiplexing (TDM) of a slot/a symbol in a HD method and a slot/a symbol in a SBFD method. The above-described FIG. 8(b) shows an example of TDM of a slot/a symbol in a HD method and a slot/a symbol in a SFFD method.

FIG. 9 illustrates a slot configuration in a subband full-duplex method and a slot configuration in a single frequency full-duplex method to which the present disclosure may be applied.

In reference to FIG. 9(a), for a SBFD method, an overlap between a DL subband region and an UL subband region does not occur. In addition, a guard band may exist between a DL subband region and an UL subband region. In reference to FIG. 9(b), for a SFFD method, an overlap between a DL subband region and an UL subband region may occur.

Full-duplex Method-based Bandwidth Part Configuration and Uplink/Downlink Transmission and Reception

Hereinafter, a method for configuring a bandwidth part (BWP) resource for a FD operation in an intra-carrier is proposed. Specifically, a BWP configuration method for a terminal is proposed for a time resource and/or a frequency resource that a base station performs a FD operation.

For example, the present disclosure may consider a situation in which a terminal performs transmission in a FDR scenario of a base station, i.e., a scenario in which a base station performs transmission and reception in the same time slot. A FDR operation of a base station includes all of a case in which a frequency resource for transmission and a frequency resource for reception are the same, a case in which a frequency resource for transmission and a frequency resource for reception are adjacent (in a carrier) and a case in which a frequency resource for transmission and a frequency resource for reception are are different, but it may mean that transmission and reception are performed at the same time. For FDR, a base station may allocate both a DL resource and an UL resource at the same time for a FDR operation in a carrier, and it may be desirable that a corresponding UL resource is positioned at the center of a frequency in a carrier to suppress adjacent cell interference (ACI). In this case, for resource allocation efficiency in terms of a base station, a method of being allocated a discontinuous or flexible frequency resource in terms of a terminal may be considered. In the present disclosure, BWP configuration methods related thereto are proposed.

For a method proposed in the present disclosure, it is described by assuming that a base station generally performs a FD operation, but a terminal performs a HD operation. However, a method proposed in the present disclosure may be applied even when both a base station and a terminal perform a HD operation.

Specifically, FDR means that transmission and reception are simultaneously performed in the same time/frequency resource or some overlapping time/frequency resources and has a different characteristic from TDD and FDD.

For FD of a base station and HD of a terminal, interference between adjacent carriers, i.e., adjacent cell interference (ACI), may be considered. In general, the same UL/DL configuration may be used between different carriers which perform TDD to reduce interference between carriers. However, when an operator simultaneously performs UL/DL transmission and reception in a carrier it supports by introducing FD of a specific base station, it may cause interference to other operators operating an adjacent carrier.

FIG. 10 illustrates base station resource operation based on a full-duplex method to which the present disclosure may be applied.

In reference to FIG. 10(a), when a FD operation is performed in an adjacent carrier in a time resource for a DL in a specific carrier, a terminal performing UL transmission in a corresponding specific carrier may cause interference to a terminal performing DL reception. In other words, a terminal cross-link interference (CLI) problem may occur between terminals.

Conversely, in reference to FIG. 10(b), when a FD operation is performed in an adjacent carrier in a time resource for an UL in a specific carrier, interference for a base station performing UL reception in a corresponding specific carrier may occur. In other words, a base station CLI problem may occur between base stations.

In general, since transmission power of a base station is greater than that of a terminal, it is undesirable that a base station of a base station and a terminal becomes a source of interference. Accordingly, when a FD operation of a specific carrier is performed in a time resource for a DL in an adjacent carrier, it may simplify a problem.

For operator 1 performing FD, when an UL/DL resource is arranged as in FIG. 10(a), a base station may have no limit to a frequency position of an UL in a time resource performing a FD operation, i.e., in a time resource performing both an UL and a DL. However, in order to minimize the impact of ACI on operator 2, a method of positioning an UL resource in the center of an operating band may be considered. When a base station performing a FD operation configures an operating band of its carrier as described above, a change in a BWP configuration for a terminal in a corresponding cell may be required.

Table 6 shows an example of the existing BWP configuration and Table 7 shows a description of an information element (IE) included in a corresponding BWP configuration.

【Table 6】

```
BWP ::=                              SEQUENCE {

    locationAndBandwidth                 INTEGER  (0..37949),

    subcarrierSpacing                    SubcarrierSpacing,

    cyclicPrefix                         ENUMERATED { extended }   OPTIONAL

}
```

[Table 7]

| |
|---|
| **cyclicPrefix**<br>Indicates whether to use the extended cyclic prefix for this bandwidth part. If not set, the UE uses the normal cyclic prefix. Normal CP is supported for all subcarrier spacings and slot formats. Extended CP is supported only for 60 kHz subcarrier spacing. |
| **locationAndBandwidth**<br>Frequency domain location and bandwidth of this bandwidth part. The value of the field shall be interpreted as resource indicator value (RIV). The first PRB is a PRB determined by subcarrierSpacing of this BWP and offsetToCarrier (configured in SCS-SpecificCarrier contained |
| within FrequencyInfoDL / FrequencyInfoUL / FrequencyInfoUL-SIB / FrequencyInfoDL-SIB within ServingCellConfigCommon / ServingCellConfigCommonSIB) corresponding to this subcarrier spacing. In case of TDD, a BWP-pair (UL BWP and DL BWP with the same bwp-Id) must have the same center frequency. |
| **subcarrierSpacing**<br>Subcarrier spacing to be used in this BWP for all channels and reference signals unless explicitly configured elsewhere. Corresponds to subcarrier spacing according to TS 38.211 [16], table 4.2-1. The value kHz15 corresponds to $\mu$=0, value kHz30 corresponds to $\mu$=1, and so on. Only the values 15 kHz, 30 kHz, or 60 kHz (FR1), and 60 kHz or 120 kHz (FR2) are applicable. For the initial DL BWP this field has the same value as the field subCarrierSpacingCommon in MIB of the same serving cell. |

In reference to Table 6 and Table 7, one BWP has one cyclicPrefix, locationAndBandwidth and subcarrierSpacig. Based on the existing BWP configuration, for all modes of TDD and FDD, a terminal may expect to receive a configuration of a BWP configured with only consecutive physical resource blocks (PRB).

However, as described above, when a frequency is operated by considering both a resource for an UL and a resource for a DL at the same time (e.g., frequency operation in FIG. 10), a different form of configuration from the existing BWP may be required.

FIG. 11 illustrates a bandwidth part configuration based on a full-duplex method to which the present disclosure may be applied.

In reference to FIG. 11, an improved BWP of a terminal for a FDR operation of a base station, etc. is illustrated. Considering a situation where an UL subband is considered in the center part like a BWP for FDR(1), a DL BWP needs to configure a discontinuous PRB resource as a BWP. Alternatively, like a BWP for FDR(2), it may be also considered to configure a structure in which a DL BWP and an UL BWP are not overlapped.

For all cases according to FIG. 11, the existing BWP configuration should be configured with only consecutive PRBs and a DL BWP and an UL BWP connected to each other should have the same center frequency. Here, a DL BWP and an UL BWP connected to each other may mean a DL BWP and an UL BWP with the same BWP identifier (bwp-id).

Accordingly, a BWP configuration as in FIG. 11 may not be supported with the existing BWP configuration, and the present disclosure proposes a new BWP configuration method therefor. For example, considering that an UL subband is positioned in the center part like a BWP for FDR(1), particularly for a DL BWP, a BWP configuration having a discontinuous PRB resource may be necessary.

Accordingly, a method that a base station configures a BWP configured with discontinuous frequency resources for a terminal unlike the existing BWP may be considered. Here, in order to configure a BWP configured with discontinuous frequency resources, all or part of the following resource block (RB) types may be used.

(First Type) A RB which configures a BWP and is used
(Second Type) A RB which configures a BWP and is not used
(Third Type) A RB which does not configure a BWP and is not used

Here, a RB which configures a BWP may refer to a RB explicitly configured/indicated by a base station to configure a corresponding BWP in a BWP configuration step or through system information (e.g., a MIB, a SIB, etc.) or through certain signaling (e.g., RRC signaling, a MAC-CE, DCI, etc.). Conversely, a RB which does not configure a BWP may refer to a RB that a base station does not explicitly configure/indicate whether a corresponding RB configures a BWP for a terminal.

In addition, a used RB may refer to a RB that a terminal may receive frequency resource allocation (i.e., frequency domain resource allocation (FDRA)) to transmit and receive a channel and/or a reference signal, etc. of an uplink or a downlink after configuring a BWP. Conversely, an unused RB may refer to a RB that a terminal is expected not to receive frequency resource allocation for transmitting and receiving a channel and/or a reference signal, etc. of an uplink or a downlink after configuring a BWP.

For the existing BWP configuration (e.g., Table 6 and Table 7), a BWP was configured/indicated only with RBs corresponding to the first type. On the contrary, a BWP configuration method for a RB corresponding to the second type and a BWP configuration method implicitly including RBs corresponding to the third type because RBs corresponding to the first type are not consecutive need to be additionally considered.

In this case, a method may be considered in which a base station configures a BWP and informs a terminal of used RB(s) and unused RB(s) among corresponding RBs (e.g., hereinafter, regarding Embodiment 1). Alternatively, a method may be considered in which a base station informs a terminal of RB(s) configuring a BWP, but corresponding RB(s) are configured discontinuously on a frequency, so a corresponding terminal implicitly receives a configuration/an indication that RB(s) which do not configure a corresponding BWP and are not used (i.e., the third type) exist in a BWP (e.g., hereinafter, regarding Embodiment 2).

FIG. 12 illustrates a bandwidth part configuration by a base station based on a full-duplex method and physical resource block (PRB) indexing of a terminal to which the present disclosure may be applied.

In reference to FIG. 12, A represents the first type of RB (i.e., a RB which configures a BWP and is used), B represents the second type of RB (i.e., a RB which configures a BWP and is not used) and C represents the third type of RB (i.e., a RB which does not configure a BWP and is not used). In FIG. 12, a RB may refer to a PRB.

FIG. 12(a) and FIG. 12(b) show an example of a BWP configuration that unused RBs are included in some of RBs configuring a BWP. In other words, corresponding BWPs are configured with a RB which configures a BWP and is used and a RB which configures a BWP and is not used.

FIG. 12 (c) and FIG. 12 (d) show an example of a BWP configuration that an unused RB is not included. In other words, corresponding BWPs are configured with a RB which configures a BWP and is used and a RB which does not configure a BWP and is not used.

In the existing wireless communication system, a base station informs a terminal of a specific point (e.g., point A) through system information, and a terminal indexes a corresponding specific point as Common Resource Block (CRB) 0. Afterwards, a terminal performs PRB indexing based on CRBs which configure a BWP by using a locationAndBandwidth IE included in a BWP configuration. In this case, when a BWP is configured with discontinuous PRBs, PRB indexing may be performed by including unused CRB(s) or may be performed without including unused CRB(s) . For example, FIG. 12(b) shows an example that PRB indexing is performed by including unused CRB(s) and FIG. 12(d) shows an example that PRB indexing is performed without including unused CRB(s). In this case, a BWP size for each case may vary.

Hereinafter, a variety of examples of configuring/indicating a BWP configuration considering a full-duplex (FD) operation and a center frequency based on a corresponding BWP configuration will be described.

Embodiment 1

This embodiment relates to a method for configuring/indicating a BWP by including an unused RB. Specifically, this embodiment relates to a method in which a base station configures a BWP and informs a terminal of used RB(s) and unused RB(s) among corresponding RB(s).

For example, a method may be considered in which a base station configures a BWP of a terminal by informing a terminal of consecutive PRBs configuring a BWP and also informing a terminal of a position of other unused consecutive PRBs. In this case, a terminal may identify both an index of PRB(s) which configure a BWP and an index of PRB(s) which configure a BWP but are not used among indicated PRB indexes.

Hereinafter, specific examples of the above-described method for configuring/indicating a PRB resource which configures a BWP but is not used will be described.

For all specific examples described below, a terminal may consider applying a PRB which configures a BWP but is not used according to a time resource. In other words, when a base station configures/indicates to a terminal PRB(s) which configure a corresponding BWP but are not used for a specific BWP through a certain method, a terminal may be configured to apply a corresponding configuration/indication according to time.

Here, applying a corresponding configuration/indication according to time may refer to applying to a time duration in which it is explicitly informed that a base station is performing a FD operation or a time duration in which it is not explicitly informed, but a terminal may determine that a base station performs a FD operation. For example, when a base station configures/indicates for a specific BWP that multiple PRBs configure a corresponding BWP but are not used, the configuration/indication is not applied in a slot that a corresponding base station performs a HD operation, but may be applied in a slot that a corresponding base station performs a FD operation.

(Embodiment 1-1)

This Embodiment 1-1 relates to a method for additionally configuring/indicating unused RB resource information in a BWP configuration. In other words, a base station may configure information about a RB resource which configures a BWP but is not used to a terminal through information element (IE) of a BWP configuration.

For example, by introducing a new parameter of a BWP configuration, a terminal may consider a method of excluding some of PRB resources configuring a BWP. As an example, as in Table 8, by adding a locationAndBandwidth2 parameter to an IE of a BWP configuration, a method for excluding PRBs indicated by a corresponding parameter from configuring a BWP for a terminal may be considered.

【Table 8】

```
BWP ::=                          SEQUENCE {
    locationAndBandwidth             INTEGER  (0..37949),
    subcarrierSpacing                SubcarrierSpacing,
    cyclicPrefix                     ENUMERATED { extended }   OPTIONAL
    locationAndBandwidth2            INTEGER  (0..37949),
}
```

A name of a new parameter in Table 8 corresponds to an example for convenience of a description, and it is obvious that a method proposed in the present disclosure may be applied even when a parameter with other name representing information excluding some of PRB resources configuring a BWP is applied.

For example, locationAndBandwidth2 may configure/indicate information about a PRB index excluded from a BWP configuration. In this case, a terminal may determine/identify a CRB resource included in a BWP based on locationAndBandwidth and configure a PRB for a corresponding BWP by using a determined/identified CRB resource. A terminal may acquire/identify information about an index of a PRB excluded from a BWP configuration among the configured PRB resources through locationAndBandwidth2.

As a specific example, a terminal may determine that all N PRB resources configured through locationAndBandwidth configure a BWP and may determine that the remaining M (i.e., N-K) PRB resources excluding K PRB resources configured through locationAndBandwidth2 among corresponding N PRB resources are 'RB(s) which configure and use a BWP'. Alternatively, a terminal may determine that M (i.e., N-K) PRB resources excluding 'K PRB resources' configured through locationAndBandwidth2 from 'N PRB resources configuring a BWP' configured through locationAndBandwidth configure an actual BWP.

Alternatively, a PRB resource configured by locationAndBandwidth and a PRB resource configured by locationAndBandwidth2 may be configured not to be overlapped. In this case, a terminal may determine a PRB resource configured by locationAndBandwidth as 'a PRB which configures a corresponding BWP and is used' and determine a PRB resource configured by locationAndBandwidth2 as 'a PRB which configures a corresponding BWP, but is not used'.

As another example, locationAndBandwidth2 may configure/indicate information about a CRB index excluded from a BWP configuration. In this case, a terminal may determine/identify a CRB resource included in a BWP based on locationAndBandwidth and configure a PRB for a corresponding BWP by using a determined/identified CRB resource. A terminal may acquire/identify information about an index of a CRB excluded from a BWP configuration among the configured PRB resources through locationAndBandwidth2.

As a specific example, a terminal may determine that all N PRB resources configured through locationAndBandwidth configure a BWP and determine that the remaining M (i.e., N-K) PRB resources excluding K PRB resources corresponding to a position of K CRB resources configured through locationAndBandwidth2 from N corresponding PRB resources are 'RB(s) which configure a BWP and are used'. Alternatively, a terminal may determine that M (i.e., N-K) PRB resources excluding 'K CRB resources' configured through locationAndBandwidth2 from 'N PRB resources configuring a BWP' configured through locationAndBandwidth configure an actual BWP.

In this case, when a CRB resource configured through locationAndBandwidth2 is configured to be overlapped with a CRB resource configured through locationAndBandwidth, a value of the M is the same as N-K. On the other hand, when a CRB resource configured through locationAndBandwidth2 is configured not to overlappped with a CRB resource configured through locationAndBandwidth, a value of the M may exist within a range of N-K <= M <= N.

When a CRB resource configured by locationAndBandwidth and a CRB resource configured by locationAndBandwidth2 described above are configured not to be overlapped, a terminal may determine that a PRB resource configured by locationAndBandwidth is 'a PRB which configures a corresponding BWP and is used' and determine that a PRB resource corresponding to a position of a CRB resource configured by locationAndBandwidth2 is 'a PRB which configures a corresponding BWP but is not used'.

In addition, a method may be also considered in which a PRB configured by locationAndBandwidth2 should be included in a PRB configured/indicated by locationAndBandwidth based on the same or similar notation as the existing locationAndBandwidth. For all notations of locationAndBandwidth2, a method may be considered in which locationAndBandwidth2 includes a frequency duration which is not overlapped with a PRB configured/indicated by locationAndBandwidth. In other words, PRB(s) indicated by locationAndBandwidth2, but not indicated by locationAndBandwidth may be determined as 'a resource which configures a BWP, but is not used'. In addition, a base station may configure/indicate multiple locationAndBandwidth2 parameters to a terminal.

(Embodiment 1-2)

This Embodiment 1-2 relates to a method for excluding a frequency resource configuration of other BWP from frequency resource configurations of a specific BWP.

For example, for a specific BWP configured for a terminal, a method for excluding a frequency resource corresponding to locationAndBandwidth of other BWP indicated among frequency resource configurations of a corresponding BWP may be considered. In this case, a relationship between a specific BWP and a BWP which limits a frequency resource of a corresponding BWP may be implicitly indicated or may be determined based on implicit rules.

Here, as an explicit indication method, a method may be considered in which a base station indicates specific BWP identification information (e.g., a bwp-id) and single or a plurality of BWP identification information for a terminal and indicates that PRBs of a corresponding specific PRB configure a BWP but are not used. For example, a base station may configure/indicate a terminal to exclude a frequency resource overlapped with a frequency resource of a DL BWP with a bwp-id of 2 among frequency resources of a DL BWP with a terminal's bwp-id of 1.

Alternatively, as a method based on implicit rules, a method for using a linked BWP may be considered. According to the existing BWP configuration, a terminal may confirm both an UL BWP and a DL BWP with the same bwp-id and based thereon, for a specific BWP, a PRB corresponding to a frequency resource configured/indicated by locationAndBandwidth of a linked BWP may be excluded from a configuration of a corresponding BWP. For example, for a DL BWP with a bwp-id of 1, a frequency resource configuring an UL BWP (i.e., an UL BWP with a bwp-id of 1) linked by an indication of a base station may be excluded from a frequency resource configuration of a DL BWP with a bwp-id of 1.

(Embodiment 1-3)

This Embodiment 1-3 relates to a method for excluding a specific frequency resource from a BWP configuration.

For example, a method for excluding an UL resource configured by other configuration and/or a resource configured as a guard band from a BWP configuration may be considered. In addition to a BWP configuration, a base station may give a configuration/an indication to exclude a specific PRB configuration from a BWP of a terminal through RRC, a MAC-CE and/or DCI, etc. As an example, a base station may configure/indicate a specific BWP of a terminal through a bwp-id, etc. and configure/indicate a certain PRB group to a terminal based on system information and a terminal-specific/cell-specific/group-specific signal for a corresponding BWP (through RRC, a MAC-CE and/or DCI, etc.). A corresponding terminal may receive a configuration/an indication that a configured/indicated certain PRB group is a PRB resource which configures a corresponding BWP but is not used.

(Embodiment 1-4)

This Embodiment 1-4 relates to a method for configuring PRB(s) through a BWP configuration and configuring/indicating whether to use a PRB. In other words, a base station may configure PRB(s) configuring a BWP to a terminal and inform it of whether to use a PRB.

For example, based on the existing BWP configuration (e.g., Table 6 and Table 7), a method may be considered in which locationAndBandwidth, etc. is used to inform PRB(s) configuring a BWP and subsequently or simultaneously inform 'an used PRB' and 'an unused PRB'. In other words, a base station may configure/indicate information about availability or disability of a PRB configuring a BWP to a terminal through certain signaling (e.g., RRC signaling, a MAC-CE, DCI, etc.).

As another example, based on the existing BWP configuration (e.g., Table 6 and Table 7), a method may be also considered in which PRB(s) indicated by using locationAndBandwidth, etc. are determined as 'PRB(s) which configure a BWP but are not used' and 'an used PRB' is separately configured/indicated. In other words, a terminal may be configured to determine all PRB(s) of the (previously) configured/indicated BWP as 'PRB(s) which configure a BWP but are not used' and determine only a PRB indicated by a method in the above-described embodiments (e.g., embodiment 1-1, 1-2, 1-3) as 'a PRB which configures a BWP and is used'.

As another example, conversely, based on the existing BWP configuration (e.g., Table 6 and Table 7), a method may be also considered in which PRB(s) indicated by using locationAndBandwidth, etc. are determined as 'PRB(s) which configure a BWP and are used' and 'an unused PRB' is separately configured/indicated. In other words, a terminal may be configured to determine all PRB(s) of the (previously) configured/indicated BWP as 'PRB(s) which configure a BWP and are used' and determine only a PRB indicated by a method in the above-described embodiments (e.g., embodiment 1-1, 1-2, 1-3) as 'a PRB which configures a BWP and is not used'.

When a BWP configuration including 'an unused PRB' is performed according to examples described in this embodiment (e.g., embodiment 1-1 to embodiment 1-4, etc.), a terminal may identify/have an index (e.g., a PRB index) for both 'a PRB which configures a BWP and is used' and 'a PRB which configures a BWP but is not used'.

FIG. 13 shows an example of a bandwidth part configuration by a base station based on a full-duplex method and PRB indexing of a terminal according to an embodiment of the present disclosure.

A PRB index may be configured/allocated for all RB resources configuring a BWP by PRB indexing of a terminal based on the above-described BWP configuration. A represents 'a PRB which configures a BWP and is used' and B represents 'a PRB which configures a BWP but is not used'.

In reference to FIG. 13, a BWP in FIG. 13(a) includes 'a PRB which configures a BWP and is used' (i.e., PRB index 0 to 15) and 'a PRB which configures a BWP but is not used' (i.e., PRB index 16 to 20). A BWP in FIG. 13(b) includes 'a PRB which configures a BWP and is used' (i.e., PRB index 4 to 16) and 'a PRB which configures a BWP but is not used' (i.e., PRB index 0 to 3, PRB index 17 to 20). A BWP in FIG. 13(c) includes 'a PRB which configures a BWP and is used' (i.e., PRB index 0 to 8, PRB index 13 to 20) and 'a PRB which configures a BWP but is not used' (i.e., PRB index 9 to 12).

Regarding a BWP configured for a terminal, a BWP size acts as a major parameter for frequency domain resource allocation for a corresponding terminal, so it needs to be determined according to a certain method.

For example, a method for determining a BWP size by the number of 'PRBs which configure a corresponding BWP and are used' may be applied. As an example, for FIG. 13(a), a BWP size may be determined as 16RBs (i.e., PRB index 0 to 15), for FIG. 13(b), a BWP size may be determined as 13RBs (i.e., PRB index 4 to 16) and for FIG. 13(c), a BWP size may be determined as 17RBs (i.e., PRB index 0 to 8, PRB index 13 to 20).

As another example, a method for determining a BWP size by the number of ‘all PRBs configuring a corresponding BWP’ may be applied. For example, for all of FIG. 13(a), FIG. 13(b) and FIG. 13(c), a BWP size may be determined as 21RBs (i.e., PRB index 0 to 20).

For examples described in this embodiment (e.g., embodiment 1-1 to embodiment 1-4, etc.), a method may be considered in which a terminal applies specific locationAndBandwidth differently according to a time resource. When a base station indicates ’PRB(s) which configure a BWP but are not used’ to a terminal for a specific BWP through any method of the above-described examples, a terminal may be configured to apply a corresponding indication according to a time resource.

Here, applying a corresponding configuration/indication according to time may refer to applying to a time duration in which it is explicitly informed that a base station is performing a FD operation or a time duration in which it is not explicitly informed, but a terminal may determine that a base station performs a FD operation. For example, when a base station configures/indicates for a specific BWP that multiple PRB(s) ’configure a corresponding BWP but are not used’, the configuration/indication is not applied in a slot that a base station performs a HD operation, but may be applied in a slot that a corresponding base station performs a FD operation. Alternatively, information about a time resource to which locationAndBandwidth2 is applied (e.g., that an unused PRB resource is configured) or a time resource to which locationAndBandwidth2 is not applied may be configured to a terminal. In this case, a terminal may determine that a base station performs a FD operation in a time resource configured to apply locationAndBandwidth2 and may determine that a base station performs a HD operation in a time resource which is not configured.

## Embodiment 2

This embodiment relates to a method for configuring/indicating a BWP which does not include an unused RB. Specifically, this embodiment relates to a method in which a base station informs a terminal of only RB(s) configuring a corresponding BWP when configuring a BWP.

For example, a base station may configure/indicate only PRB(s) configuring a BWP to a terminal, but may consider that corresponding PRB(s) are not consecutive. In other words, a base station may be configured to transmit information about ’PRB(s) which configure a BWP and are used’ to a terminal, and in addition, explicitly transmit or implicitly transmit information about ’PRB(s) which do not configure a BWP and are not used’ to a terminal.

Here, ’PRB(s) which do not configure a BWP and are not used’ may refer to RB(s) with a CRB index but without a PRB index according to a position from a specific time point (e.g., point A) configured/indicated by a base station.

To this end, in reference to methods described in Embodiment 1 described above, methods for replacing ’PRB(s) which configure a BWP but are not used’ with ’PRB(s) which do not configure a BWP and are not used’ configured/indicated by a base station to a terminal may be considered. In addition, a method for excluding ’PRB(s) which configure a BWP but are not used’ from a PRB indexing operation of a terminal configured according to methods described in Embodiment 1 described above may be also considered.

In addition, a method for configuring a BWP which does not include ’unused PRB(s)’ may be considered according to examples described below.

### (Embodiment 2-1)

This embodiment 2-1 relates to a method for configuring multiple RB resource groups for one BWP.

For example, in a BWP configuration for a terminal, a base station may configure multiple locationsAndBandwidth for one BWP. In the same way that the existing locationAndBandwidth indicates ’RB(s) which configure a BWP and are used, as an example, a method for configuring locationAndBandwidth2 to additionally indicate ’RB(s) which configure a BWP and are used’ may be applied.

Table 9 shows an example of a BWP configuration according to a corresponding method.

【Table 9】

```
BWP ::=                          SEQUENCE {

    locationAndBandwidth            INTEGER (0..37949),

    locationAndBandwidth2           INTEGER (0..37949),

    subcarrierSpacing               SubcarrierSpacing,

    cyclicPrefix                    ENUMERATED { extended }   OPTIONAL

}
```

In Table 9, cyclicPrefix and subcarrierSpacing may be configured to be commonly applied to locationAndBandwidth and locationAndBandwidth2. In addition, a terminal may expect that locationAndBandwidth and locationAndBandwidth2 will indicate a resource which is not overlapped on a frequency.

locationAndBandwidth and locationAndBandwidth2 may indicate a position of a frequency resource according to the same notation. Alternatively, locationAndBandwidth2 may be configured/defined in a form showing an offset and a bandwidth from locationAndBandwidth.

For example, locationAndBandwidth and locationAndBandwidth2 may configure/indicate information about 'a PRB index which configures a BWP and is used'. In this case, a terminal may determine/identify a CRB resource included in a BWP based on locationAndBandwidth and locationAndBandwidth2 and configure a PRB for a corresponding BWP by using a determined/identified CRB resource.

As another example, similar to the above-described embodiment 1-1, locationAndBandwidth2 may configure/indicate information about a CRB index excluded from a BWP configuration. In this case, a terminal may determine a CRB resource included in a BWP based on locationAndBandwidth. Among determined/identified CRB resources, information about a CRB index excluded from a BWP configuration may be configured to a terminal through locationAndBandwidth2.

As a specific example, a terminal may determine that the remaining M (i.e., N-K) PRB resources excluding K PRB resources corresponding to a position of K CRB resources configured through locationAndBandwidth2 from N PRB resources configured through locationAndBandwidth2 configure an actual BWP. A terminal may configure a PRB for a corresponding BWP by using CRB resources which are finally determined as described above. In other words, for M CRB resources configuring a BWP, a PRB resource may be configured by configuring a CRB resource as PRB index 0 to M-1 in order starting from a CRB resource with the lowest index. In other words, a PRB resource is discontinuous, but a PRB index may be configured consecutively.

In this case, when a CRB resource configured through locationAndBandwidth2 is configured to be overlapped with a CRB resource configured through locationAndBandwidth, a value of the M is the same as N-K. On the other hand, when a CRB resource configured through locationAndBandwidth2 is configured not to overlappped with a CRB resource configured through locationAndBandwidth, a value of the M may exist within a range of N-K <= M <= N.

In addition, a method may be considered in which a terminal applies locationAndBandwidth2 differently according to a time resource. Here, applying a corresponding configuration/indication according to time may refer to applying to a time duration in which it is explicitly informed that a base station is performing a FD operation or a time duration in which it is not explicitly informed, but a terminal may determine that a base station performs a FD operation. For example, when a base station configures/indicates locationAndBandwidth for a specific BWP, the configuration/indication is not applied in a slot that a base station performs a HD operation, but may be applied in a slot that a corresponding base station performs a FD operation.

(Embodiment 2-2)

This embodiment 2-2 relates to a method for activating multiple BWPs for the same time resource.

For example, a terminal, contrary to the existing operation, may expect that multiple BWPs are activated at the same time (i.e., the same time resource). In this case, for a relationship between BWPs which may be activated at the same time, a candidate may be determined/configured by a predefined rule/promise. As an example, multiple BWPs may be allocated to one bwp-id and at least one BWP of them may be activated by an indication of a base station. Alternatively, when cyclicPrefix and subcarrierSpacing are the same and only locationAndBandwidths is different among BWPs with a different bwp-id, a base station may be configured to activate two BWPs at the same time.

In this case, a frequency resource indicated by multiple locationAndBandwidth may configure only BWPs which exist within a certain range on a predefined frequency as its candidate. Alternatively, a set of bwp-ids which may be activated at the same time may be configured by a prior promise. As an example, a DL BWP with a bwp-id of 1, 2 and 3 may be configured to be activated by an indication at the same time.

For examples described in this embodiment (e.g., embodiment 2-1 and embodiment 2-2, etc.), a method may be considered in which a terminal applies specific locationAndBandwidth differently according to a time resource. When a base station indicates 'PRB(s) which configure a BWP but are not used' to a terminal for a specific BWP through any method of the above-described examples, a terminal may be configured to apply a corresponding indication according to a time resource.

Here, applying a corresponding configuration/indication according to time may refer to applying to a time duration in which it is explicitly informed that a base station is performing a FD operation or a time duration in which it is not explicitly informed, but a terminal may determine that a base station performs a FD operation. For example, when a base station configures/indicates for a specific BWP that multiple PRB(s) 'configure a corresponding BWP but are not used', the configuration/indication is not applied in a slot that a base station performs a HD operation, but may be applied in a slot that a corresponding base station performs a FD operation. Alternatively, information about a time resource to which locationAndBandwidth2 is applied (e.g., that an additionally used PRB resource is configured or a configuration for an unused CRB resource is applied) or a time resource to which locationAndBandwidth2 is not applied may be configured to a terminal. In this case, a terminal may determine that a base station performs a FD operation in a time resource configured to apply locationAndBandwidth2 and may determine that a base station performs a HD operation in a time resource which is not configured.

FIG. 14 shows another example of a bandwidth part configuration by a base station based on a full-duplex method and PRB indexing of a terminal according to an embodiment of the present disclosure.

By PRB indexing of a terminal based on the above-described BWP configuration, a PRB index may be configured/allocated only for 'RB resource(s) which configure a BWP and are used'. A represents 'a PRB which configures a BWP and is used' and C represents 'a PRB which does not configure a BWP and is not used'.

In reference to FIG. 14, a BWP includes 'a PRB which configures a BWP and is used' (i.e., PRB index 0 to 8, PRB index 9 to 16) and 'a PRB which does not configure a BWP and is not used'.

Regarding a BWP configured for a terminal, a BWP size acts as a major parameter for frequency domain resource allocation for a corresponding terminal, so it needs to be determined according to a certain method.

For example, a method for determining a BWP size by the number of 'PRBs which configure a corresponding BWP and are used' may be applied. As an example, for FIG. 14, a BWP size may be determined as 17RBs (i.e., PRB index 0 to 16). In other words, a BWP size may be determined by a configured PRB index.

As another example, a method for determining a BWP size by the number of 'PRBs which configure a BWP' and 'PRBs which do not configure a BWP and are not used' may be applied. As an example, 'a PRB which does not configure a BWP and is not used' may correspond to RB(s) which exist between 'PRBs which configure a BWP and are used', and a PRB index is not allocated, but a CRB index is calculated by using a distance from a specific point (e.g., point A), so a terminal may know the number of RBs. For FIG. 14, a BWP size may be determined as a total of 21RBs by adding 'PRBs which configure a BWP and are used' (i.e., PRB index 0 to 16) and 'RB(s) which do not configure a BWP and are not used' (i.e., 4 RBs).

## Embodiment 3

This embodiment relates to a method for configuring a center frequency of a BWP based on a BWP configuration according to the above-described examples.

In reference to Table 7 described above, in TDD, there is a limit that an UL BWP and a DL BWP have the same center frequency. It may mean that when a time duration or a frequency band in which a base station performs an operation in a FD method is defined by TDD in terms of a terminal, a condition that a center frequency is the same for a BWP pair with the same bwp-id, i.e., an UL BWP and a DL BWP should be satisfied.

Accordingly, according to the above standards, even when a BWP is configured by a method, etc. in the above-described examples (e.g., embodiment 1, embodiment 2) for a time duration or a frequency band in which a base station operates in a FD method, a center frequency between an UL BWP and a DL BWP should be the same, but there is no definition of a center frequency for a BWP configuration according to a method, etc. in the above-described examples (e.g., embodiment 1, embodiment 2).

Accordingly, when considering a BWP configuration according to a method, etc. in the above-described examples (e.g., embodiment 1, embodiment 2), a method may be considered in which a center frequency is configured differently even for TDD between BWPs with the same bwp-id. It may mean that when a base station operates in a FD method although a TDD method is configured for a terminal, it relaxes a condition to ensure that an UL BWP and a BL BWP do not need to have the same center frequency.

Alternatively, there may be a case in which such relaxation is impossible, i.e., an UL BWP and a DL BWP that a base station performs an operation in a FD method should also have the same center frequency. In this case, it is required to define a center frequency which will be applied when a BWP is configured that discontinuous frequency resource(s) or unused frequency resource(s) configured based on a method, etc. in the above-described examples (e.g., embodiment 1, embodiment 2) are indicated.

Hereinafter, examples of configuring/indicating/defining a center frequency for a BWP configuration based on a method, etc. in the above-described examples (e.g., embodiment 1, embodiment 2) will be described.

(Embodiment 3-1)

This embodiment 3-1 relates to a method for configuring a center frequency based on all PRBs configuring a BWP regardless of whether to use.

For example, when 'a used RB' and 'an unused RB' are designated among PRBs configuring a BWP as in embodiment 1 described above, a method may be considered in which the center of all frequencies configuring a BWP is configured as a center frequency. With a corresponding method, both an UL BWP and a DL BWP with the same bwp-id may guarantee that all center frequencies are the same.

Alternatively, a method may be also considered in which a center frequency is configured by including 'a RB which does not configure a BWP and is not used' and 'a RB which configures a BWP' . Here, 'a RB which does not configure a BWP and is not used' may be based on examples described in embodiment 2 described above. As an example, when a plurality of BWPs are activated at the same time or when multiple locationAndBandwidths are configured for one BWP, 'a RB which does not configure a BWP and is not used' may refer to a frequency resource which exists between a plurality of BWPs or locationAndBandwidths, i.e., a frequency resource that a PRB index is not allocated, but a CRB index exists.

FIG. 15 shows an example of a center frequency configuration according to an embodiment of the present disclosure.

In reference to FIG. 15, it is assumed that there are four BWPs, and a frequency resource without a PRB may refer to 'RB(s) which configure a BWP but are not used' or 'RB(s) which do not configure a BWP and are not used', and a frequency resource with a PRB may refer to 'RB(s) which configure a BWP and are used'.

As in FIG. 15, a center frequency may exist on 'RB(s) which configure a BWP and are used' or may exist on 'RB(s) which configure a BWP but are not used' or may exist on that boundary.

(Embodiment 3-2)

This embodiment 3-2 relates to a method for configuring the center of an union of a BWP and a linked BWP as a center frequency.

Here, a linked BWP may be about a pair of an (existing) DL BWP and UL BWP. In other words, a linked BWP may be about a DL BWP and an UL BWP with the same bwp-id. Alternatively, a linked BWP may be about a pair of bwp-ids indicated by certain signaling (e.g., RRC signaling, a MAC-CE, DCI, etc.).

For an union of all frequency resources indicated by a linked BWP described above, a method for configuring/determining that center value as a center frequency may be considered. Here, an union of all frequency resources indicated by a linked BWP may be a value including a guard band or may refer to the total of RB(s) indicated by an actual BWP configuration excluding a guard band.

FIG. 16 shows another example of a center frequency configuration according to an embodiment of the present disclosure.

In reference to FIG. 16, a center frequency may be configured by considering an union of a DL BWP and an UL BWP with the same bwp-id.

When multiple BWPs are activated at the same time (i.e., a certain unit time) as in the above-described embodiment 2-2, a center frequency may be configured differently according to a time resource.

As an example, when one BWP is activated, a center frequency of a corresponding BWP may be configured/determined as a center value of locationAndBandwidt indicated by a BWP configuration according to the existing method (e.g., Table 6 and Table 7). Contrary to it, when multiple BWPs are activated at a certain unit time, a center frequency may be configured/determined as a center value of a resource which integrates all BWPs activated at a corresponding unit time and DL BWP or UL BWP(s) with the same bwp-id.

(Embodiment 3-3)

This embodiment 3-3 relates to a method for configuring the center of a frequency resource forming an intersection of a BWP and a linked BWP as a center frequency. Here, the definition of a linked BWP may be the same as that of a linked BWP in the above-described embodiment 3-2.

FIG. 17 shows another example of a center frequency configuration according to an embodiment of the present disclosure.

In reference to FIG. 17, a center frequency may be configured by considering an intersection of a DL BWP and an UL BWP forming a pair. In determining a frequency resource forming an intersection, a method for making a determination based on different RB(s) for two BWPs may be considered. In other words, in determining overlapping RB(s) (e.g., overlapping PRB(s)), all or part of the following RBs may be considered.

(First Type) A RB which configures a BWP and is used
(Second Type) A RB which configures a BWP and is not used
(Third Type) A RB which does not configure a BWP and is not used

For example, in determining the center of a frequency resource which forms an intersection of UL BWP 1 and DL BWP 1 as a center frequency, RBs corresponding to an intersection of RBs which configure a BWP of UL BWP 1 and are used and RBs which configure a BWP of DL BWP 1 (e.g., including both a used RB and an unused RB) may be determined as overlapping RBs in FIG. 17.

(Embodiment 3-4)

This embodiment 3-4 relates to a method for explicitly configuring a center frequency of a BWP.

For example, a method for including a center frequency domain in a BWP configuration information element (IE) may be considered.

Table 10 shows an example of a BWP configuration according to a corresponding method.

【Table 10】

```
BWP ::=                        SEQUENCE {
   locationAndBandwidth           INTEGER (0..37949),
   centerfrequency                INTEGER (0..37949),
   subcarrierSpacing              SubcarrierSpacing,
   cyclicPrefix                   ENUMERATED { extended }   OPTIONAL
}
```

Alternatively, for a time duration in which a base station is indicated to perform an operation in a FD method or is expected to perform an operation in a FD method, a terminal may expect that a base station will indicate a center frequency of a BWP used for a corresponding time duration through certain signaling (e.g., RRC signaling, a MAC-CE, DCI, etc.). In other words, a base station may specify a specific BWP as a bwp-id, etc. to designate a center frequency of a corresponding BWP.

(Embodiment 3-5)

This embodiment 3-5 relates to a method for determining a center frequency of a linked BWP as a center frequency of a corresponding BWP. Here, the definition of a linked BWP may be the same as that of a linked BWP in the above-described embodiment 3-2.

For a DL BWP, a base station and/or a terminal may determine that a center frequency of a corresponding DL BWP is the same as a center frequency of a linked BWP (i.e., a linked UL BWP). Alternatively, for an UL BWP, a base station and/or a terminal may determine that a center frequency of a corresponding UL BWP is the same as a center frequency of a linked BWP (i.e., a linked DL BWP).

A method for applying a center frequency in the above-described examples (e.g., embodiment 3-1 to 3-5, etc.) differently according to a time resource may be considered. In other words, a terminal may be configured to apply a center frequency of the above-described method only in a time resource where a base station performs an operation in a FD method and not apply it in other durations.

As a specific example, a terminal may be configured to apply a center frequency of the above-described method in a time resource that 'a PRB which configures a BWP but is not used' is indicated and applied by a method, etc. proposed in embodiment 1 described above. In this case, a terminal may expect that a center frequency will be included in locationAndBandwidth.

Alternatively, a terminal may be configured to apply a center frequency of the above-described method in a time resource that 'a PRB which does not configure a BWP and is not used' is indicated and applied by a method, etc. proposed in embodiment 2 described above. In this case, a center frequency may indicate a frequency which is not included in locationAndBandwidt.

FIG. 18 illustrates an operation of a terminal for an uplink transmission or downlink reception method in a wireless communication system according to an embodiment of the present disclosure.

In S1810, a terminal may receive configuration information related to a BWP for at least one of uplink transmission or downlink reception.

Here, corresponding configuration information may be based on a BWP configuration described in the above-described examples (e.g., embodiment 1, embodiment 2, embodiment 3, etc.) in the present disclosure.

For example, corresponding configuration information may be a BWP configuration corresponding to Table 6 to Table 10 described above and may be for configuring resource information (e.g., a PRB resource) for configuring a BWP for a terminal.

In S1820, a terminal may identify at least one PRB based on configuration information.

Here, at least one PRB may correspond to a specific RB resource described in the above-described examples (e.g., embodiment 1, embodiment 2, embodiment 3, etc.) in the present disclosure. As an example, at least one PRB may refer to 'RB(s) which configure a BWP but are not used' in embodiment 1 described above. Alternatively, at least one PRB may refer to 'RB(s) which do not configure a BWP and are not used' in embodiment 2 described above.

For example, based on information related to a specific PRB group in a BWP, the at least one PRB may be identified by excluding the specific PRB group from all PRBs of the BWP. As an example, when the BWP is configured as a DL BWP, the at least one PRB may be for DL reception (i.e., a resource for a DL) and the specific PRB group may be for UL transmission (i.e., a resource for an UL). As an example, information related to the specific PRB group may indicate a PRB index and/or A CRB index for the measurement PRB group.

Here, information related to the specific PRB group may be included in configuration information in S1810 or may be transmitted through signaling (e.g., RRC signaling, a MAC-CE, DCI, etc.) separate from corresponding configuration information.

In addition, for example, when information related to the specific PRB group is configured for other BWP, the specific PRB group may be at least one PRB which is overlapped between the BWP and the other BWP. Here, the other BWP may be a BWP with a different BWP identifier from the BWP (e.g., a bwp-id) or may be a BWP with the same BWP identifier. The BWP and the other BWP may correspond to a linked BWP described in the above-described examples (e.g., embodiment 1, embodiment 2, embodiment 3, etc.). As an example, when the BWP and the other BWP have the same BWP identifier, the other BWP may be an UL BWP or a DL BWP associated with the BWP.

In addition, for example, information related to the specific PRB group may indicate whether a corresponding specific PRB group is used for UL transmission or DL reception. In this case, corresponding information may be delivered through certain signaling (e.g., RRC signaling, a MAC-CE, DCI, etc.).

In addition, information related to the specific PRB group may be configured to be applied only in a specific time resource that a FD operation (of a base station/a terminal) is performed. For example, a terminal may receive information indicating a TTI that an operation in a FD method is performed among at least one transmission time interval (TTI) (e.g., a slot, a Tx occasion, a symbol, etc.) from a base station. In this case, an operation according to information related to the above-described specific PRB group may be configured to be applied only in an indicated TTI.

In S1830, a terminal may perform uplink transmission or downlink reception based on at least one identified PRB. For example, a terminal may perform UL/DL transmission and reception in a frequency resource region excluding at least one PRB among all PRBs of a corresponding BWP or in a frequency resource region corresponding to at least one PRB according to whether a corresponding BWP is for a DL BWP or is for an UL BWP.

FIG. 19 illustrates an operation of a base station for an uplink reception or downlink transmission method in a wireless communication system according to an embodiment of the present disclosure.

In S1910, a base station may transmit configuration information related to a BWP for at least one of uplink reception or downlink transmission to a terminal.

Thereafter, in S1920, a base station may perform uplink reception or downlink transmission based on at least one PRB. Here, at least one PRB may be based on configuration information in S1910. Specifically, based on information related to a specific PRB group in the BWP, the at least one PRB may be identified by excluding the specific PRB group from all PRBs of the BWP.

Detailed examples for S1910 and S19220 are the same as in S1810 to S1830 of FIG. 18, so an overlapping description is omitted.

The above-described base station/terminal signaling and operation (e.g., embodiment 1, embodiment 2, embodiment 3, FIG. 18, FIG. 19, etc.) may be implemented by a device (e.g., FIG. 20) to be described below. For example, a base station may correspond to a first wireless device and a terminal may correspond to a second wireless device and in some cases, the opposite case may be considered.

For example, the above-described base station/terminal signaling and operation (e.g., embodiment 1, embodiment 2, embodiment 3, FIG. 18, FIG. 19, etc.) may be processed by at least one processor in FIG. 20 (e.g., 102, 202), and the above-described base station/terminal signaling and operation (e.g., embodiment 1, embodiment 2, embodiment 3, FIG. 18, FIG. 19, etc.) may be stored in a memory (e.g., at least one memory in FIG. 20 (e.g., 104, 204)) in a form of a command/a program (e.g., an instruction, an executable code) for driving at least one processor in FIG. 20 (e.g., 102, 202).

## General Device to which the Present Disclosure may be applied

FIG. 20 illustrates a block diagram of a wireless communication device according to an embodiment of the present disclosure.

In reference to FIG. 20, a first wireless device 100 and a second wireless device 200 may transmit and receive a wireless signal through a variety of radio access technologies (e.g., LTE, NR).

A first wireless device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second wireless device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a wireless device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefor, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a wireless device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

[Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

**1.** A method for performing uplink transmission or downlink reception by a terminal in a wireless communication system, the method comprising:

receiving configuration information related to a bandwidth part (BWP) for at least one of the uplink transmission or the downlink reception from a base station;
identifying at least one physical resource block (PRB) based on the configuration information; and
performing the uplink transmission or the downlink reception based on the at least one PRB,
wherein based on information related to a specific PRB group in the BWP, the at least one PRB is identified by excluding the specific PRB group from entire PRBs of the BWP.

**2.** The method of claim 1, wherein:
based on the BWP being configured as a downlink BWP, the at least one PRB is for the downlink reception and the specific PRB group is for the uplink transmission.

**3.** The method of claim 1, wherein:
the information related to the specific PRB group is included in the configuration information.

**4.** The method of claim 3, wherein:
the information related to the specific PRB group indicates at least one of a PRB index or a common resource block (CRB) index for the specific PRB group.

**5.** The method of claim 1, wherein:
based on the information related to the specific PRB group being configured for another BWP, the specific PRB group is at least one PRB overlapped between the BWP and the another BWP.

**6.** The method of claim 5, wherein:
the another BWP has a different BWP identifier from the BWP.

**7.** The method of claim 5, wherein:
based on the BWP and the another BWP having a same BWP identifier, the another BWP is an uplink BWP or a downlink BWP associated with the BWP.

**8.** The method of claim 1, wherein:

the information related to the specific PRB group is configured through separate signaling from the configuration information, and
the separate signaling includes at least one of radio resource control (RRC) signaling, a medium access control-control element (MAC-CE) or downlink control information (DCI).

**9.** The method of claim 1, wherein:

the information related to the specific PRB group indicates whether the specific PRB group is used for the uplink transmission or the downlink reception, and
the information related to the specific PRB group is delivered through at least one of RRC signaling, a MAC-CE or DCI.

**10.** The method of claim 1, further comprising:

receiving information indicating a transmission time interval (TTI) for a full-duplex operation among at least one TTI from the base station,
wherein the information related to the specific PRB group is applied in the TTI.

**11.** The method of claim 1, wherein:
a center frequency for the uplink transmission or the downlink reception is configured as a center of the entire PRBs of the BWP.

**12.** The method of claim 1, wherein:
the configuration information includes information on a center frequency for the uplink transmission or the downlink reception.

**13.** The method of claim 1, wherein:
the entire PRBs of the BWP are configured with multiple consecutive PRBs.

**14.** A terminal for performing uplink transmission or downlink reception in a wireless communication system, the terminal comprising:

at least one transceiver; and
at least one processor coupled with the at least one transceiver,
wherein the at least one processor is configured to:

receive configuration information related to a bandwidth part (BWP) for at least one of the uplink transmission or the downlink reception from a base station;
identify at least one physical resource block (PRB) based on the configuration information; and
perform the uplink transmission or the downlink reception based on the at least one PRB,
wherein based on information related to a specific PRB group in the BWP, the at least one PRB is identified by excluding the specific PRB group from entire PRBs of the BWP.

**15.** A method for performing uplink reception or downlink transmission by a base station in a wireless communication system, the method comprising:

transmitting configuration information related to a bandwidth part (BWP) for at least one of the uplink reception or the downlink transmission to a terminal;
performing the uplink reception or the downlink transmission based on at least one physical resource block (PRB),
wherein the at least one PRB is based on the configuration information,
wherein based on information related to a specific PRB group in the BWP, the at least one PRB is identified by excluding the specific PRB group from entire PRBs of the BWP.

**16.** A base station for performing uplink reception or downlink transmission in a wireless communication system, the base station comprising:

at least one transceiver; and
at least one processor coupled with the at least one transceiver,
wherein the at least one processor is configured to:

transmit configuration information related to a bandwidth part (BWP) for at least one of the uplink reception or the downlink transmission to a terminal;
perform the uplink reception or the downlink transmission based on at least one physical resource block (PRB),

wherein the at least one PRB is based on the configuration information,
wherein based on information related to a specific PRB group in the BWP, the at least one PRB is identified by excluding the specific PRB group from entire PRBs of the BWP.

**17.** A processing apparatus configured to control a terminal to perform uplink transmission or downlink reception in a wireless communication system, the processing apparatus comprising:

at least one processor; and
at least one computer memory operably connected to the at least one processor and storing instructions that, based on being executed by the at least one processor, perform operations,
wherein the operations include:

receiving configuration information related to a bandwidth part (BWP) for at least one of the uplink transmission or the downlink reception from a base station;
identifying at least one physical resource block (PRB) based on the configuration information; and
performing the uplink transmission or the downlink reception based on the at least one PRB,

wherein based on information related to a specific PRB group in the BWP, the at least one PRB is identified by excluding the specific PRB group from entire PRBs of the BWP.

**18.** At least one non-transitory computer-readable medium storing at least one instruction, wherein:
the at least one instruction executable by at least one processor controls a device performing uplink transmission or downlink reception in a wireless communication system to:

receive configuration information related to a bandwidth part (BWP) for at least one of the uplink transmission or the downlink reception from a base station;
identify at least one physical resource block (PRB) based on the configuration information; and
perform the uplink transmission or the downlink reception based on the at least one PRB,
wherein based on information related to a specific PRB group in the BWP, the at least one PRB is identified by excluding the specific PRB group from entire PRBs of the BWP.

FIG.1

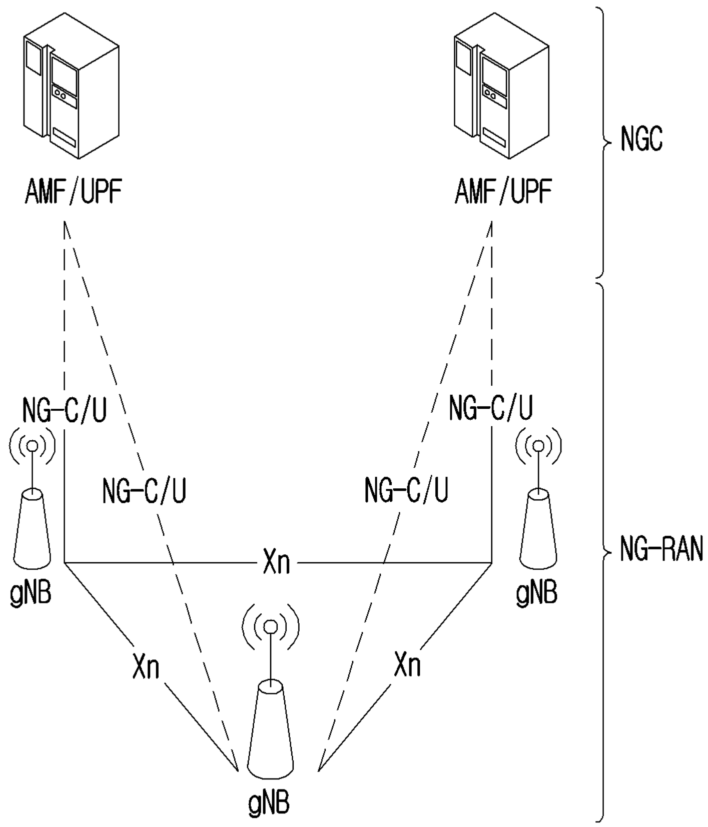
AMF/UPF
AMF/UPF
NGC
NG-C/U
NG-C/U
NG-C/U
NG-C/U
Xn
Xn
Xn
gNB
gNB
gNB
NG-RAN

FIG.2

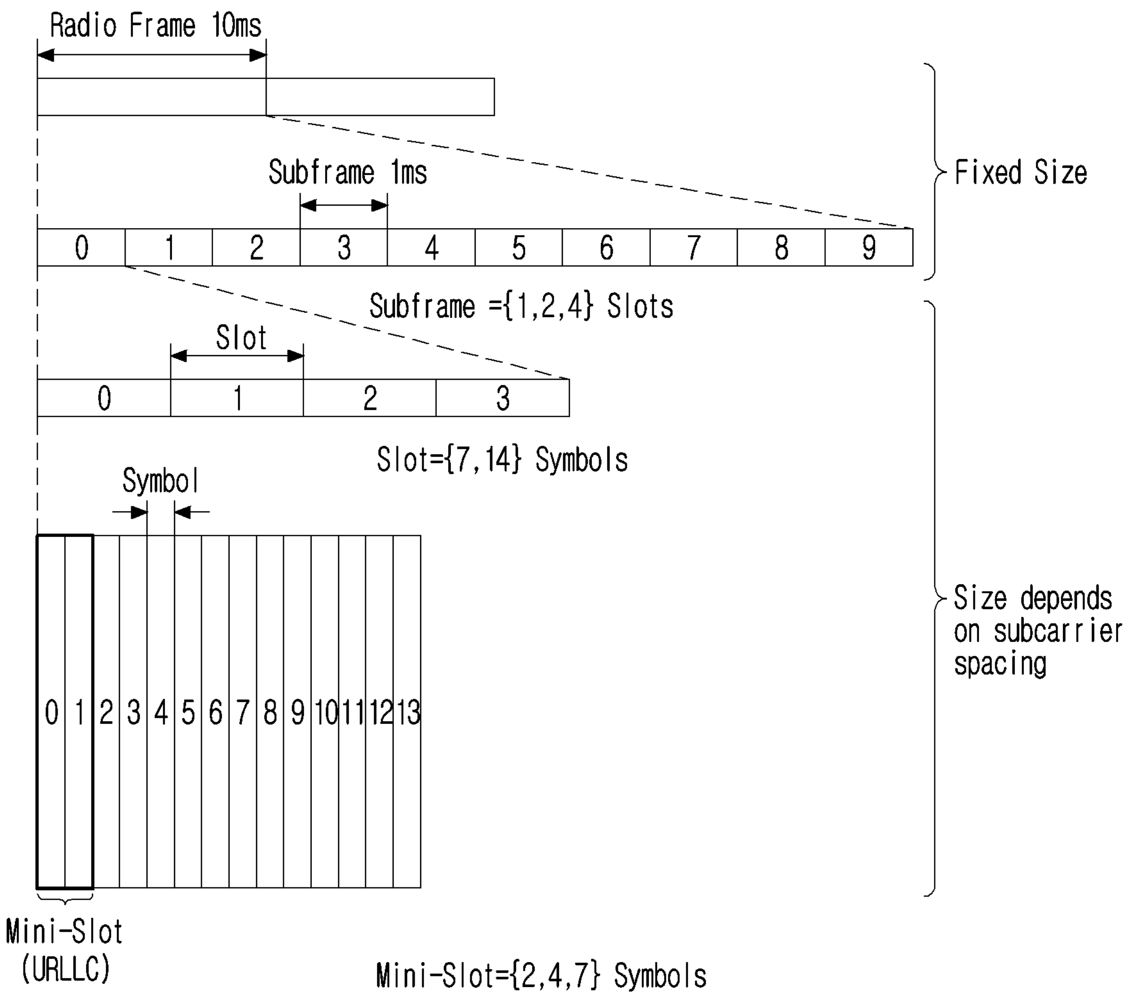

Radio Frame 10ms
Fixed Size
Subframe 1ms
0 1 2 3 4 5 6 7 8 9
Subframe ={1,2,4} Slots
Slot
0 1 2 3
Slot={7,14} Symbols
Symbol
0 1 2 3 4 5 6 7 8 9 10 11 12 13
Size depends on subcarrier spacing
Mini-Slot (URLLC)
Mini-Slot={2,4,7} Symbols

FIG.3

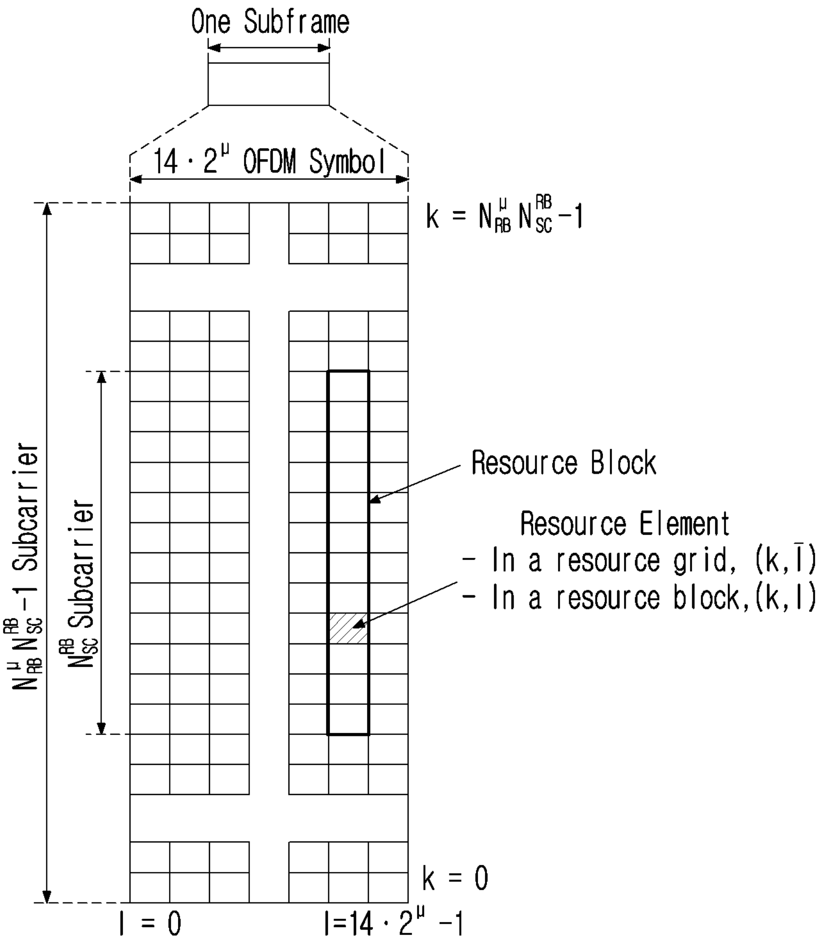
One Subframe
14 · 2^μ OFDM Symbol
k = N^μ_RB N^RB_SC −1
N^μ_RB N^RB_SC −1 Subcarrier
N^RB_SC Subcarrier
Resource Block
Resource Element
- In a resource grid, (k, l̄)
- In a resource block, (k, l)
k = 0
l = 0
l=14 · 2^μ −1

FIG.4

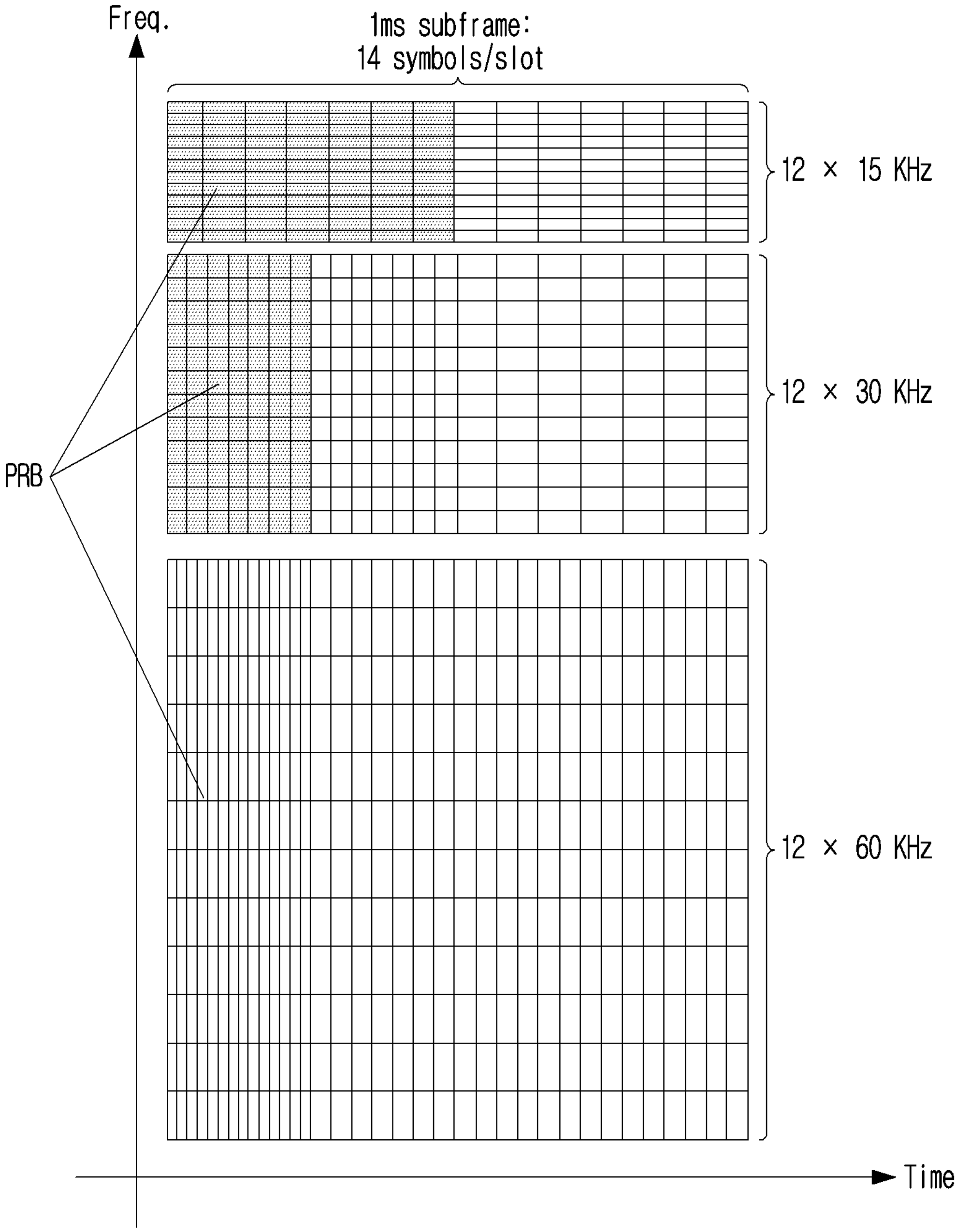
Freq.
1ms subframe:
14 symbols/slot
12 × 15 KHz
12 × 30 KHz
PRB
12 × 60 KHz
Time

FIG.5

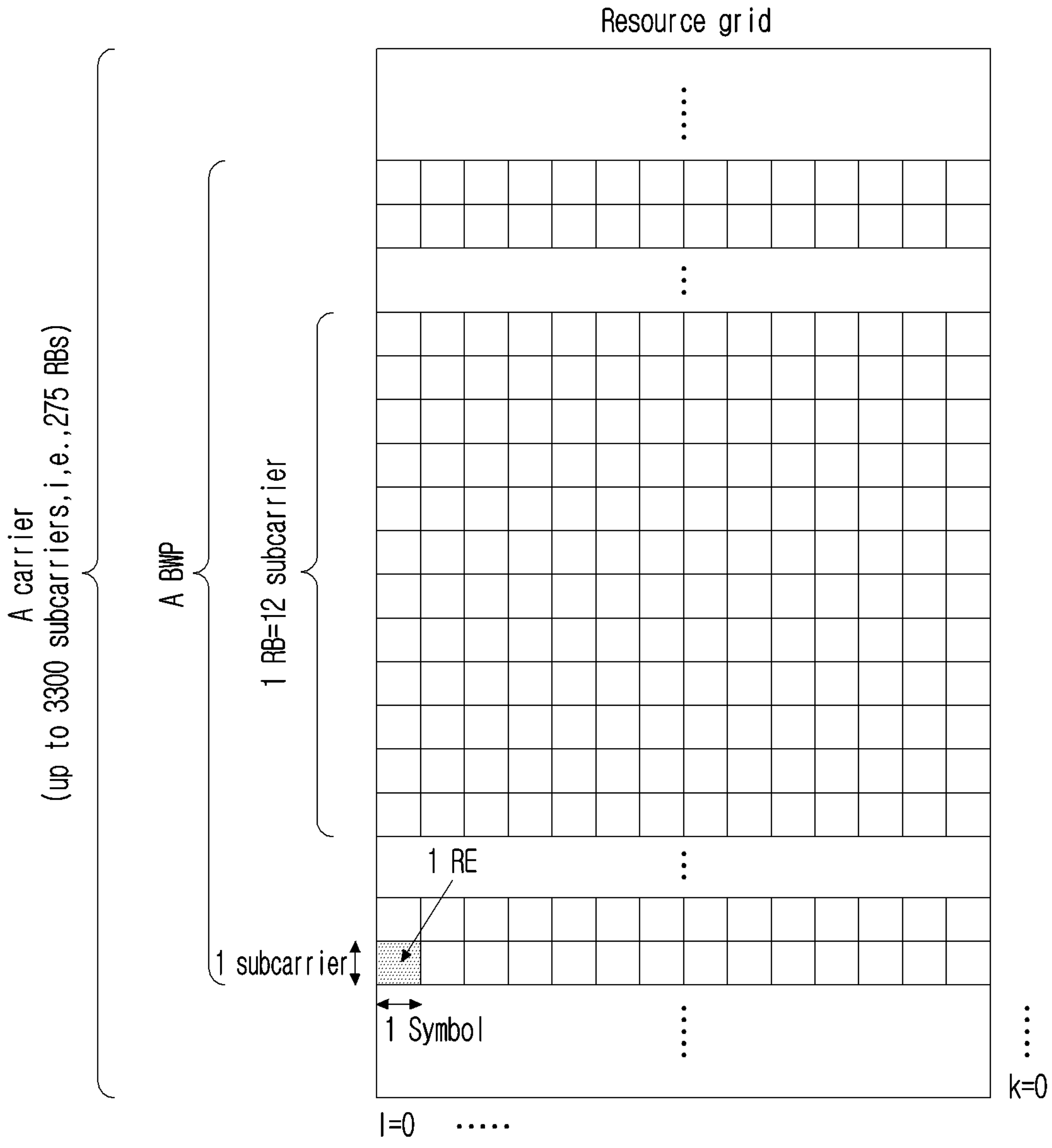
Resource grid
A carrier
(up to 3300 subcarriers,i.e.,275 RBs)
A BWP
1 RB=12 subcarrier
1 RE
1 subcarrier
1 Symbol
k=0
l=0

FIG.6

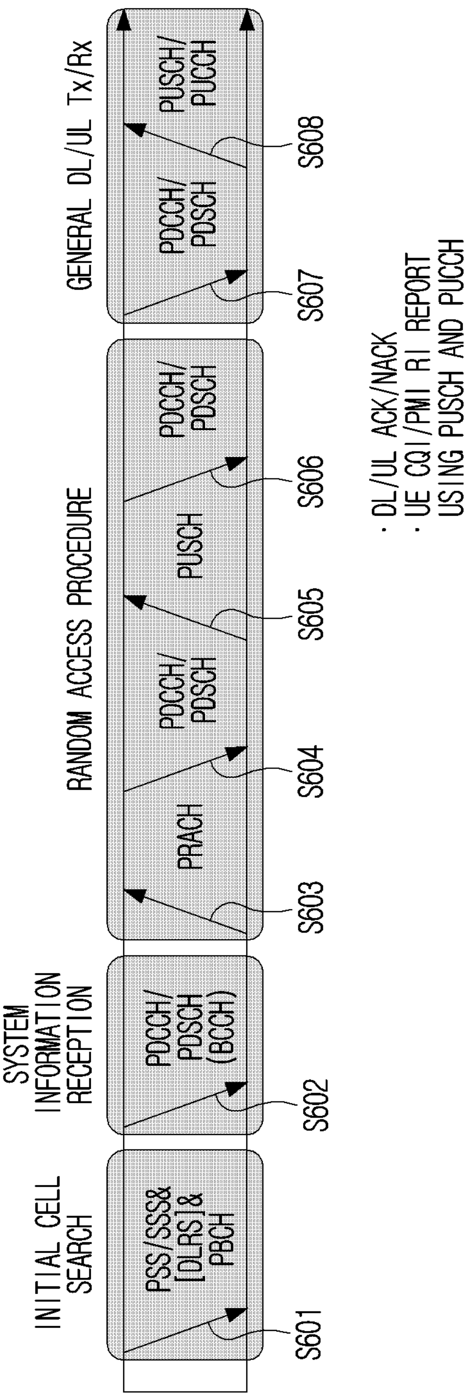
INITIAL CELL SEARCH
PSS/SSS&
[DLRS]&
PBCH
S601
SYSTEM INFORMATION RECEPTION
PDCCH/
PDSCH
(BCCH)
S602
RANDOM ACCESS PROCEDURE
PRACH
S603
PDCCH/
PDSCH
S604
PUSCH
S605
PDCCH/
PDSCH
S606
GENERAL DL/UL Tx/Rx
PDCCH/
PDSCH
S607
PUSCH/
PUCCH
S608
· DL/UL ACK/NACK
· UE CQI/PMI RI REPORT
USING PUSCH AND PUCCH

FIG.7

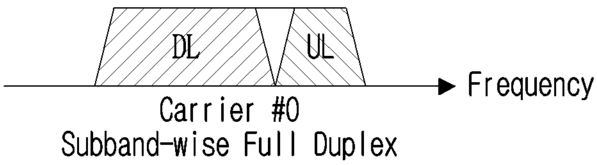


(a)

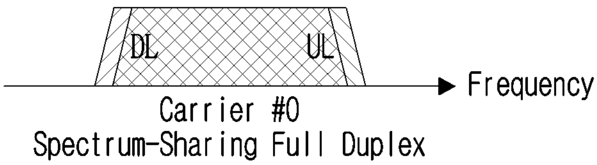


(b)

FIG.8

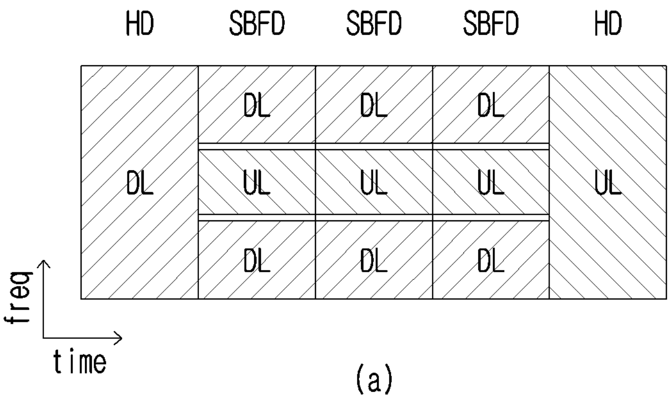


(a)

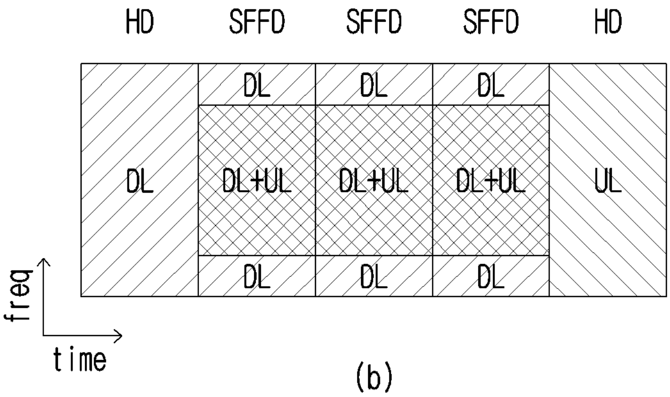


(b)

FIG.9

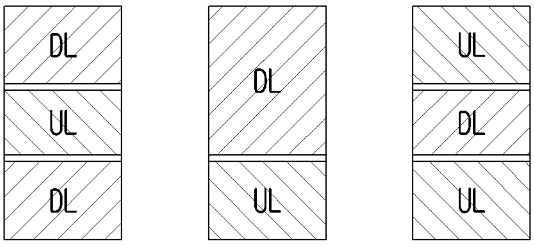


(a)

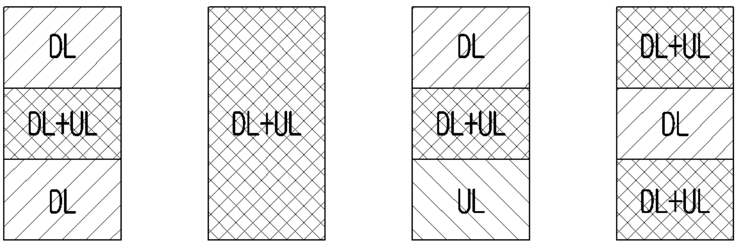


(b)

FIG.10

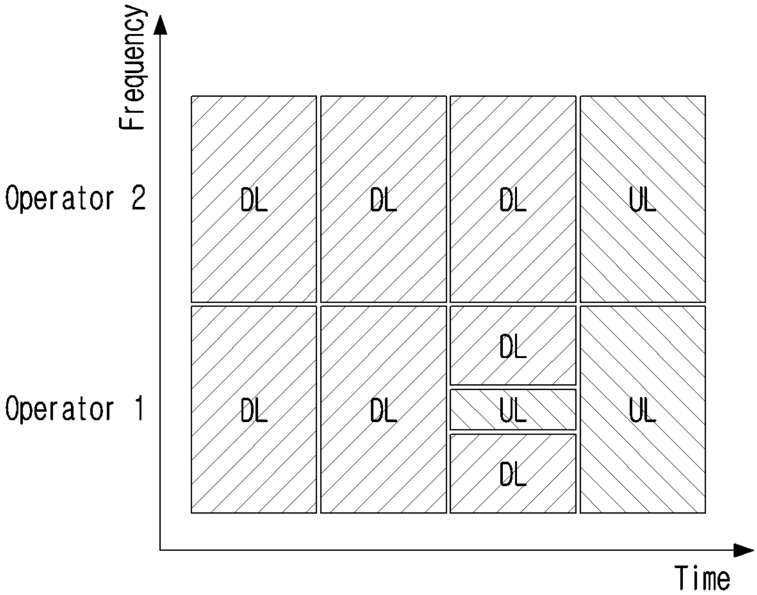
Frequency
Operator 2
Operator 1
DL
DL
DL
UL
DL
DL
DL
UL
DL
UL
Time

(a)

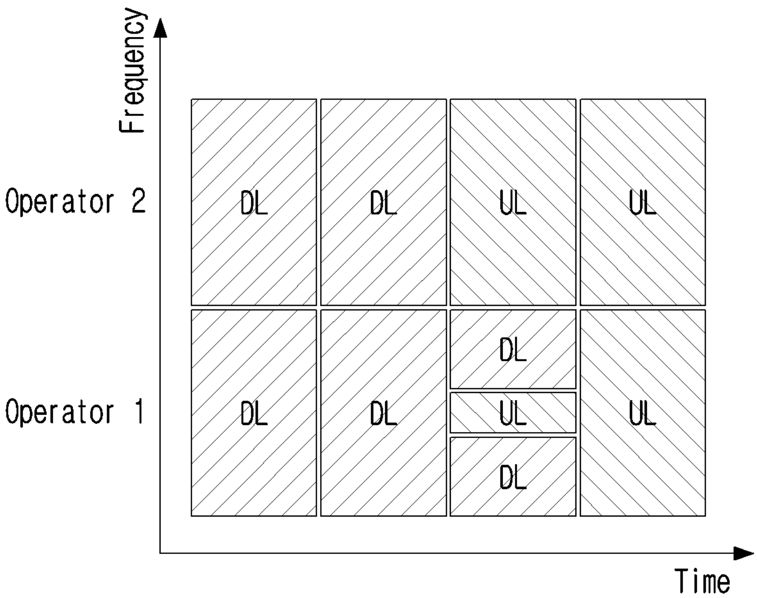
Frequency
Operator 2
Operator 1
DL
DL
UL
UL
DL
DL
DL
UL
DL
UL
Time

(b)

FIG.11

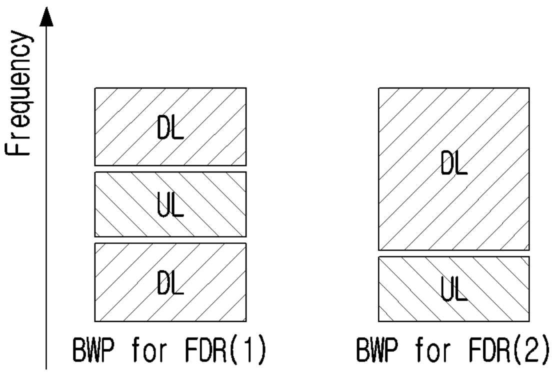

FIG.12

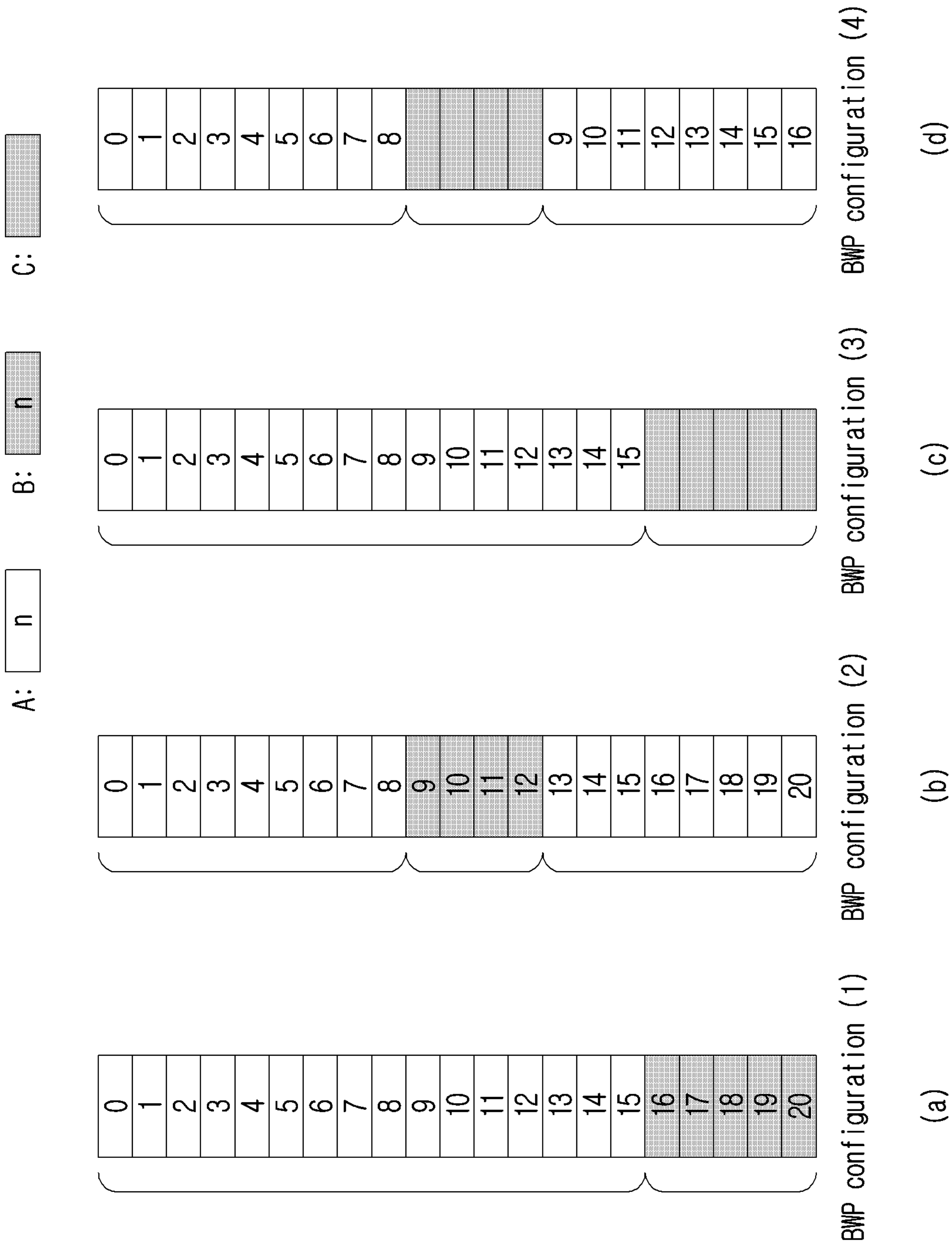
A: n
B: n
C:
BWP configuration (1)
(a)
BWP configuration (2)
(b)
BWP configuration (3)
(c)
BWP configuration (4)
(d)

FIG.13

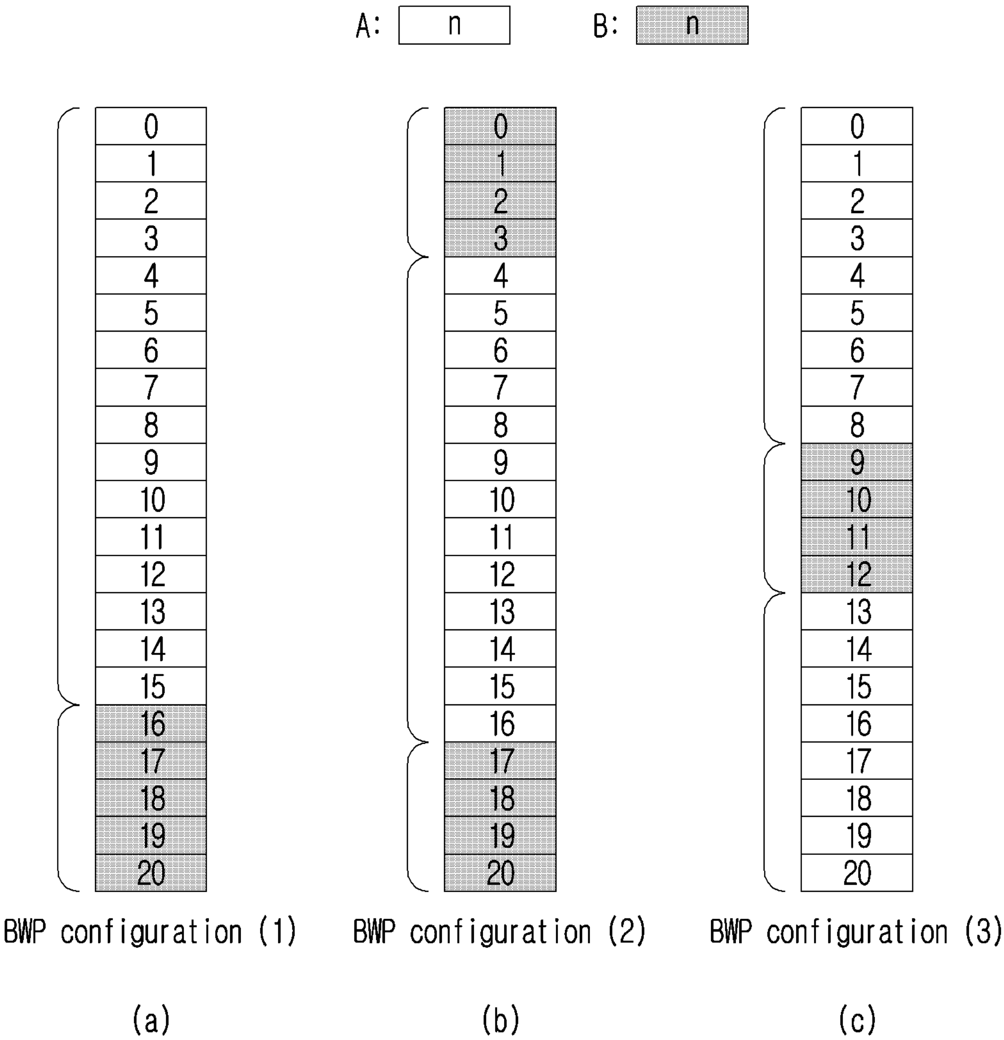
A: n
B: n
0
1
2
3
4
5
6
7
8
9
10
11
12
13
14
15
16
17
18
19
20
BWP configuration (1)
(a)
BWP configuration (2)
(b)
BWP configuration (3)
(c)

FIG.14

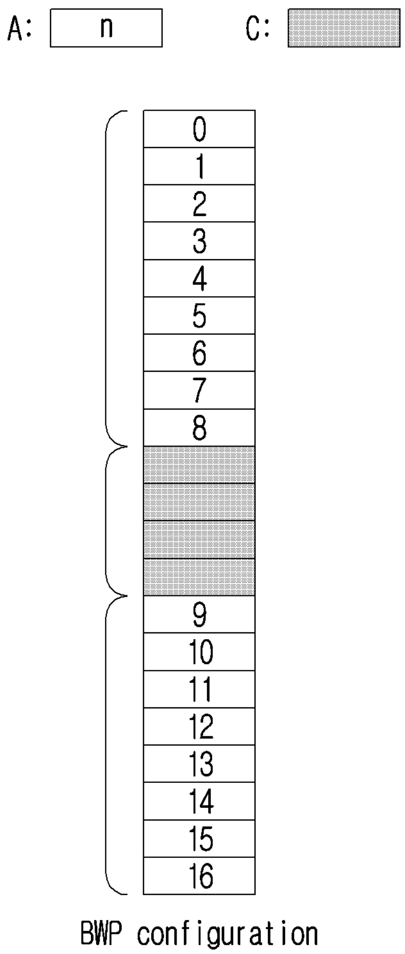

FIG. 15

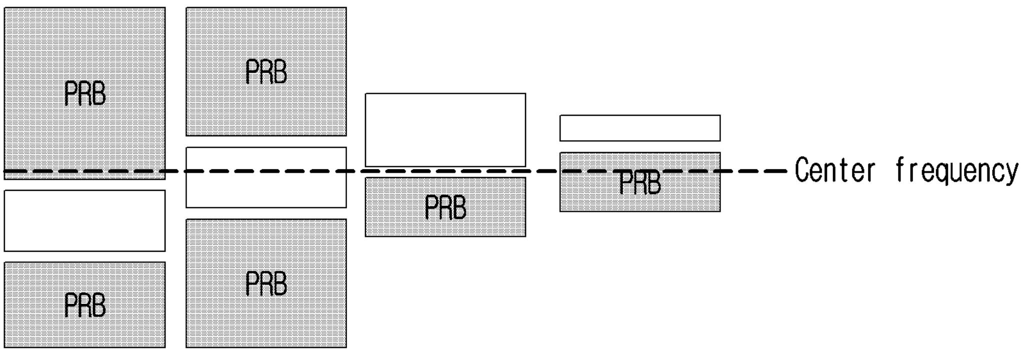


FIG. 16

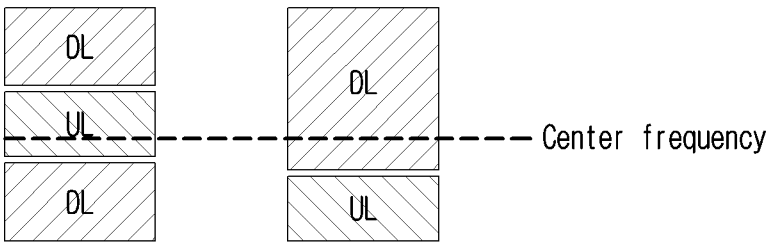


FIG. 17

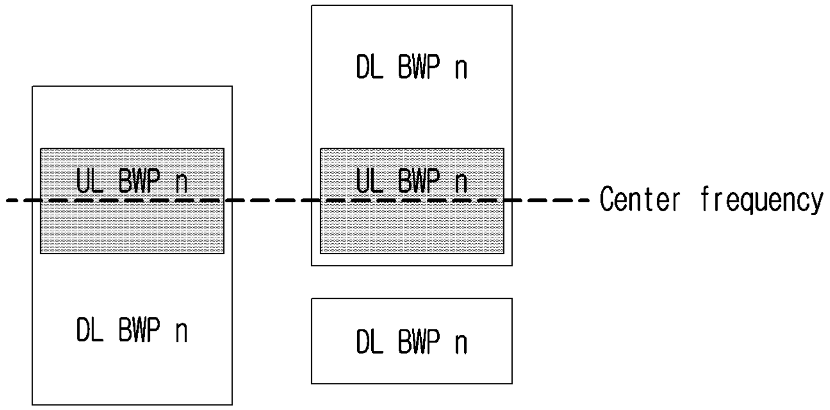

FIG.18

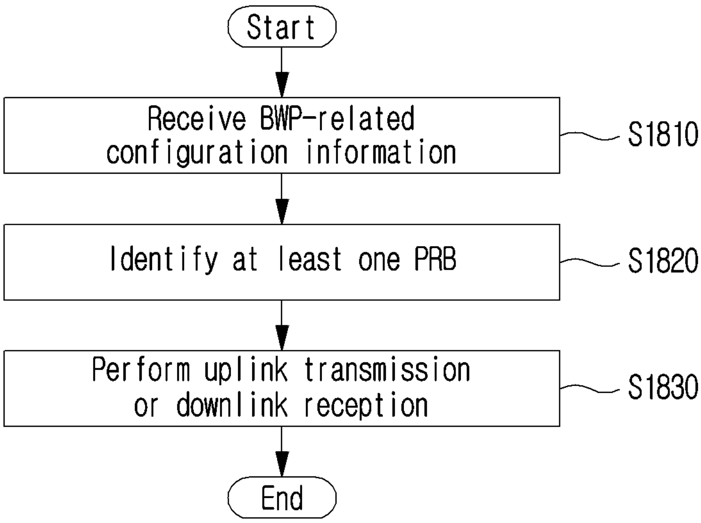
Start
Receive BWP-related configuration information
S1810
Identify at least one PRB
S1820
Perform uplink transmission or downlink reception
S1830
End

FIG.19

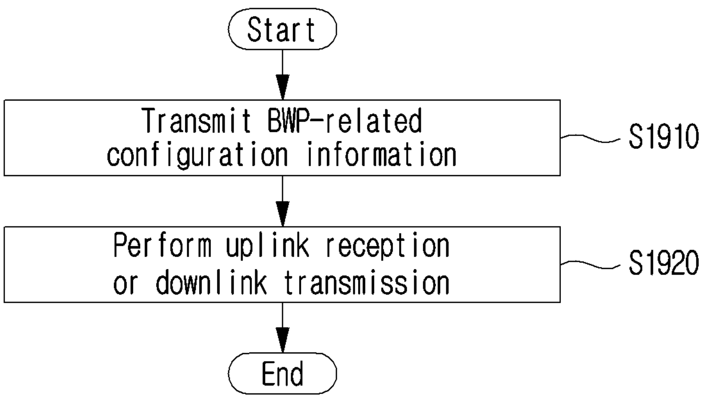
Start
Transmit BWP-related configuration information
S1910
Perform uplink reception or downlink transmission
S1920
End

FIG.20

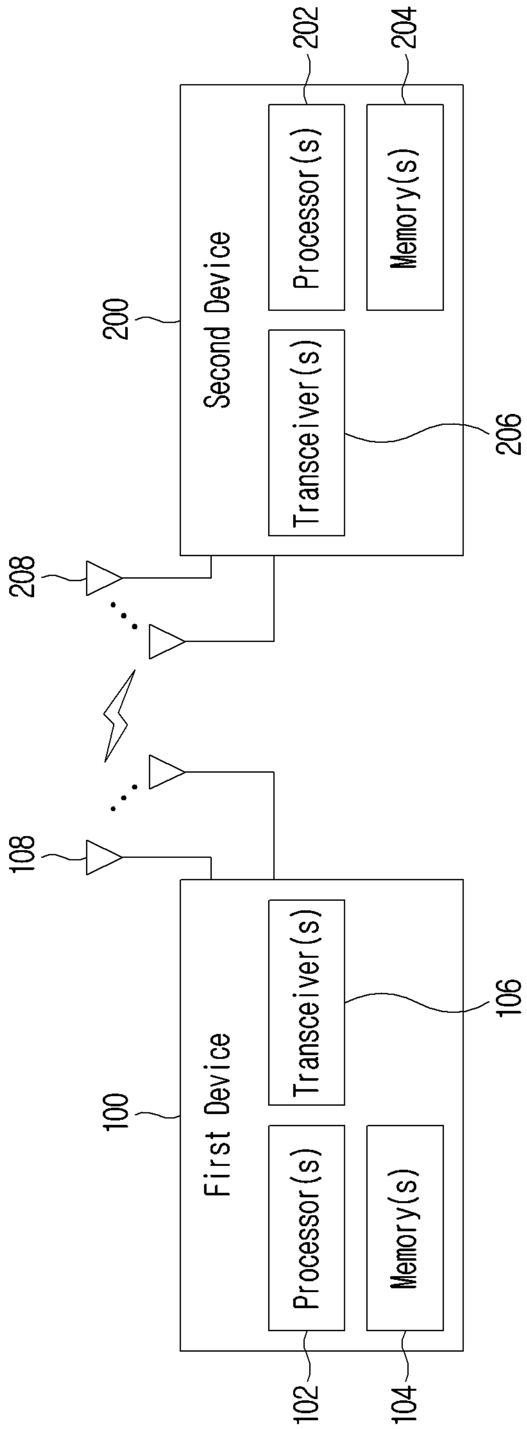
200
Second Device
Transceiver(s)
Processor(s)
Memory(s)
202
204
206
208
108
100
First Device
Processor(s)
Memory(s)
Transceiver(s)
106
102
104